# EUROPÄISCHE PATENTSCHRIFT

(11) **EP 3 911 165 B1**
(45) Veröffentlichungstag und Bekanntmachung des Hinweises auf die Patenterteilung: **27.05.2026**
(21) Anmeldenummer: 20701415.0
(22) Anmeldetag: 16.01.2020
(51) Int. Cl.: B65G 54/02, A23G 1/26, A23G 3/02

(54) **TRANSPORTSYSTEM FÜR EINE INDUSTRIELLE SÜSSWARENMASCHINE**
CONVEYOR SYSTEM FOR AN INDUSTRIAL CONFECTIONERY MACHINE
SYSTÈME DE TRANSPORT POUR UNE MACHINE À CONFISERIE INDUSTRIELLE

(30) Priorität: 18.01.2019 DE 102019101290
(43) Veröffentlichungstag der Anmeldung: 24.11.2021
(73) Patentinhaber: Winkler und Dünnebier Süsswarenmaschinen GmbH, 56579 Rengsdorf (DE)
(72) Erfinder: RUNKEL, Rainer, 56579 Rengsdorf (DE); FREUND, Christian, 56581 Kurtscheid (DE); DAUMANN, Jörg, 51588 Nümbrecht (DE); REINHARD, Felix, 56579 Rengsdorf (DE)
(74) Vertreter: Lippert Stachow Patentanwälte Rechtsanwälte
(86) Internationale Anmeldenummer: PCT/EP2020/050960
(87) Internationale Veröffentlichungsnummer: WO 2020/148359

(56) Entgegenhaltungen:
- EP-A1- 2 108 263
- EP-A1- 3 031 334

## Beschreibung

Die Erfindung betrifft ein Transportsystem für Gießformen einer industriellen Süßwarenmaschine, die mehrere Produktionsstationen und Gießformen zur Herstellung wenigstens eines Süßwarenartikels umfasst. Eine Gießform ist für aufeinanderfolgende Produktionsschritte zu den jeweiligen Produktionsstationen der Süßwarenmaschine transportierbar. Das Transportsystem umfasst eine Transportschiene sowie eine Antriebseinrichtung, mit welcher eine Transportbewegung für die jeweilige Gießform erzeugbar ist, um die Gießform entlang der einen Transportschiene zu den Produktionsstationen zu transportieren.

Auf dem technischen Gebiet der industriellen Süßwarenmaschinen ist es bekannt, mehrere Produktionsstationen vorzusehen, die von Gießformen durchlaufen werden, beispielsweise eine Gießstation, eine Rüttelstation zur Verteilung von Süßwarenmasse in einer Kavität der Gießform und/oder zur Entfernung von Luftbläschen aus der Süßwarenmasse eine Formungsstation für Schalen, eine Kühlstation, eine Wendestation zur Vorbereitung einer Ausformung von Süßwarenartikeln, eine Station zur Gießformreinigung, eine Magazinstation, etc.

Ein Transportsystem ohne Transportschiene ist auf dem technischen Gebiet der industriellen Süßwarenmaschinen bereits vorgeschlagen, das Industrieroboter in Gelenkarmbauweise mit Greifelementen einsetzt, oder auch ein System mit Transportwagen mit eigenem Antrieb, die entlang von Bahnelementen bewegbar sein sollen, jedoch mit dem Nachteil, dass für einen veränderten Produktionslablauf die Bahn umgebaut werden muss. Das Greifelement des Industrieroboters soll einzelne Gießformen ergreifen und zu umliegend angeordneten Produktionsstationen heben, ablegen und wieder entnehmen können, wie in der EP 3 111 768 A1 gezeigt.

Althergebracht ist ein Transportsystem für eine industrielle Süßwarenmaschine, mit welchem Gießformen in einer Reihe auf sogenannten parallelen Leitschienen geführt sind. Ein solches Transportsystem geht beispielsweise aus der Patentschrift DE 725 504 hervor. Bei diesem schienengebundenen Transportsystem sind als Tragplatten bezeichnete Gießformen vorgesehen, die beidseits mit Zapfen versehen sind. Beidseits der Reihe der Gießformen ist je eine Förderkette vorgesehen. An der Förderkette sind Stifte als Mitnehmer für die Gießform vorgesehen, die mit den Zapfen der Gießform zusammenwirken und auf diese Weise den Transport entlang der Leitschienen bewirken.

Aus der EP 3 031 334 A1 ist bekannt ein Transportwagen für ein Formen-Transportsystem, ein Modul für ein Transportsystem, insbesondere für Formen bei der Herstellung von Süßwaren, ein Transportsystem, eine Fertigungsstraße für Süßwaren die Verwendung von Transportwagen zum Transport von Formen in einer Fertigungsstraße für Süßwaren und ein Verfahren zum Transportieren von Formen in einer Fertigungsstraße für Süßwaren. Der erfindungsgemäße Transportwagen zum Transport von Formen in einem, bevorzugt räumlich fest installierten, Transportsystem mit einer Aufnahme für oder enthaltend mindestens eine Form ist mit einem eigenen Antrieb ausgestattet ist. Insbesondere ist Transportwagen kraft seines Antriebs entlang eines Bahnelements verfahrbar.

Die EP 2 108 263 A1 schlägt eine Förderanlage für Formanlagen von Süßwarenprodukten vor, insbesondere von Schokolade, bei der Formen schrittweise entlang einer Führungs- und Stützstruktur mittels einer motorisierten Fördervorrichtung bewegt werden, die mindestens eine Längsstange umfasst, die eine Reihe von Schieberelementen trägt, die wie die Formen beabstandet sind. Der oder jeder Längsbalken dreht sich zwischen einer ersten Position, in der die Schieber unwirksam sind, und einer zweiten Position, in der die Schieber von hinten an die Formen angreifen, und er ist linear in einer abwechselnden geradlinigen Bewegung zwischen einer zurückgezogenen Position und einer vorgeschobenen Position synchron mit der Drehung der Schieber beweglich. Das Prinzip, Gießformen mittels einer Förderkette entlang von Leitschienen zu transportieren, hat sich bis heute erhalten. Es wird immer noch für neue Industriemaschinen zur Süßwarenherstellung verwendet. Seit langem wird aber aus Hygienegründen nach einer besseren Alternative gesucht, weil Förderketten Schmiermittel benötigen, die in der Lebensmittelproduktion gerne vermieden würden. Außerdem werden Förderketten mit Süßwarenmasse kontaminiert und es ist unmöglich, sie dann wieder hundertprozentig zu reinigen.

Darüber hinaus geht mit dem Prinzip der Förderkette einher, dass die Größe/Länge einer Gießform, gemessen in Transportrichtung, stets abgestimmt sein muss auf die Teilung der Förderkette.

Des Weiteren ergeben sich für die Ausdehnung einzelner Produktionsstationen in Transportrichtung Beschränkungen, weil auch die Abmessung der Produktionsstation abgestimmt sein muss auf die Kettenteilung der Förderkette. Besondere Nachteile ergeben sich, wenn eine Industriemaschine für die Süßwarenherstellung als endlos umlaufende Anlage aufgebaut ist. Die einzelnen Produktionsstationen benötigen für ihren jeweiligen Produktionsschritt unterschiedlich viel Zeit. Grundsätzlich bestimmt die langsamste Produktionsstation die Produktivität der Süßwarenmaschine insgesamt. Zwischen einzelnen Produktionsstationen ergeben sich bei einem Transportsystem mit Förderketten zwangsläufig freie Transportstrecken, im Bereich derer kein Produktionsschritt erfolgt. Die freie Transportstrecke ist in der Regel lückenlos auf jeder möglichen Position mit einer Gießform bestückt, obwohl zwischen weit auseinander angeordneten Produktionsstationen kein Produktionsschritt geschieht. Lücken in der Reihe der Gießformen sollen vermieden werden, weil eine folgende Produktionsstation andernfalls zu lange auf die nächste Gießform zu warten hätte.

Bei Transportsystemen mit Förderketten wird daher versucht, die Produktionsschritte vieler unterschiedlicher Produktionsstationen aneinander anzugleichen. Auf diese Weise sollen Arbeitsphasen innerhalb der Produktionsstationen sowie Transportphasen zwischen den Produktionsstationen aufeinander abgestimmt werden. Einzelne Produktionsstationen werden dann oft mit ungünstigen Parametern betrieben, der betreffende Produktionsschritt beispielsweise schneller oder langsamer durchgeführt als eigentlich erforderlich.

Der Erfindung liegt die Aufgabe zugrunde, ein schienengebundenes Transportsystem so weiterzubilden, dass einzelne Produktionsstationen effektiver nutzbar sind und freie Transportstrecken reduzierbar sind, auf denen kein Produktionsschritt erfolgen würde.

Erfindungsgemäß wird die Aufgabe mit einem Transportsystem gemäß Anspruch 1 gelöst. Dazu gehört, dass die Antriebseinrichtung wenigstens zwei schienengeführte Schlittenelemente aufweist, wobei die Schlittenelemente an derselben Transportschiene voneinander beabstandet ankoppelbar sind, wobei wenigstens eines der beiden Schlittenelemente individuell entlang der Transportschiene antreibbar ist, um eine Hauptbewegung zu erzeugen, wobei die beiden Schlittenelemente mit einer Aufnahmeeinrichtung kombiniert sind, mit der wenigstens eine Gießform aufnehmbar ist, wobei eine Steuereinrichtung vorgesehen ist zur Steuerung der Hauptbewegung für das Schlittenelement zusammen mit der Aufnahmeeinrichtung der Gießform in Transportrichtung zu den jeweiligen Produktionsstationen, und wobei mittels der Steuereinrichtung darüber hinaus zusätzlich eine Hilfsbewegung in die Aufnahmeeinrichtung übertragbar ist, indem die zwei Schlittenelemente relativ voneinander weg oder aufeinander zu bewegbar sind, um die Gießform für den jeweiligen Produktionsschritt passend zu bewegen.

Nachfolgende Richtungsangaben gehen von einem Koordinatensystem aus, bei dem die Transportschiene in X-Richtung/Achse/Koordinate ausgerichtet ist. Waagerecht und im rechten Winkel zur Transportschiene liegt die Y-Achse. Rechtwinklig sowohl zur X-Achse als auch rechtwinklig zur Y-Achse ist als Drittes die Z-Achse angeordnet.

Das vorgeschlagene Transportsystem beschränkt sich nicht auf den Transport von Gießformen beziehungsweise Artikeln im Bereich der Süßwaren, sondern eignet sich allgemein für den Transport von Gießformen für gießbare Massen, wie z.B. Massen, die pharmazeutische Mittel beinhalten oder Massen die Nahrungsergänzungsmittel beinhalten, etc. Die Gießformen können jedwede Ausgestaltung aufweisen, die sich zum Gießen von Süßwarenmassen oder zum Gießen von Massen mit pharmazeutischen Mitteln oder Massen mit Nahrungsergänzungsmitteln eignet.

Die Hilfsbewegung ist quasi eine Prozessbewegung, die für den Produktionsschritt in der jeweiligen Produktionsstation ausgeführt werden muss. In der einfachsten Form kann die Prozessbewegung in der Richtung der Transportschiene stattfinden und der Hauptbewegung überlagert sein. Ein Beispiel dafür ist es, wenn die Aufnahmeeinrichtung entlang der Transportschiene vor und zurück bewegt werden soll, um eine Prozessbewegung zu erzeugen, die eine Rüttelbewegung ist. Mit einer Rüttelbewegung kann Süßwarenmasse **z.B.** gleichmäßig verteilt werden. Auch wenn es darum geht, Luftblasen entweichen zu lassen, ist eine Rüttelbewegung zweckmäßig. Ein anderes Beispiel ist eine Bandgussbewegung, bei der die Gießform/Aufnahmeeinrichtung während des Gießvorgangs entlang der Transportschiene innerhalb einer Gießstation während des Gießvorgangs mitbewegt wird, um einen Süßwarenartikel im Bandgussverfahren zu erzeugen. Die Gießform wird dadurch unter einer Gießdüse der Gießstation entlang bewegt, während Süßwarenmasse aus der Gießdüse heraus dosiert wird, so dass ein bandförmiger Artikel entsteht.

Die vorgeschlagene Maßnahme verzichtet auf eine starre Förderkette, die mehrere Produktionsstationen durchläuft. Das neue Transportsystem schafft durch diese Maßnahme eine Größenabhängigkeit zwischen der Gießform und der Kettenteilung einer Förderkette ab. Ebenso ist die Größenabhängigkeit zwischen einzelnen Produktionsstationen relativ zu dieser Kettenteilung abgeschafft.

Das Schlittenelement kann unabhängig entlang der Transportschiene bewegt werden. Aufeinander folgende Schlittenelemente sind in ihrer Beschleunigung und Geschwindigkeit grundsätzlich unabhängig voneinander. Nach Bedarf kann die Bewegung zweier oder mehrerer Schlittenelemente aber auch synchronisiert werden.

Mit dem neuen Transportsystem für industrielle Süßwarenmaschinen können freie Transportstrecken, auf denen kein Produktionsschritt erfolgt, deutlich reduziert werden. Es ist nicht mehr erforderlich eine Transportstrecke lückenlos mit einer Reihe Gießformen besetzt zu halten, um an eine nachfolgende Produktionsstation möglichst pausenlos Gießformen heranzutransportieren. Die Schlittenelemente können jede Gießform individuell beschleunigen und mit ausreichender Geschwindigkeit zur nächsten Produktionsstation heranbewegt werden.

Das neue Transportsystem erlaubt es auf diese Weise, die Effektivität einer Süßwarenmaschine zu erhöhen. Jede einzelne Produktionsstation kann besser an Kapazitätserfordernisse angepasst werden. Die Produktionskapazität ist nicht mehr beeinflusst durch die Produktionskapazität einer benachbarten Produktionsstation. Die Dimension der Produktionsstation ist unabhängig von einer Kettenteilung.

Besonders nützlich ist es, wenn das Schlittenelement mit einer zusätzlichen Bewegungseinrichtung versehen ist, die zur Ausführung der Hilfsbewegung der Gießform beitragen kann, und dass die Bewegungseinrichtung zwischen dem Schlittenelement und der Aufnahmeeinrichtung für die Gießform angeordnet ist. Vorzugsweise hat dann die Hilfsbewegung zumindest eine Bewegungskomponente in einer anderen Richtung als die in Richtung der Transportschiene verlaufende Hauptbewegung.

Die Hilfsbewegung kann eine zusammengesetzte Bewegung sein. Sie kann mehrere Bewegungskomponenten haben. Dabei kann eine Bewegungskomponente in Richtung der Transportschiene beinhaltet sein. Außerdem kann eine Bewegungskomponente oder können mehrere Bewegungskomponenten, in anderer Richtung liegen, um so die jeweils in einer Produktionsstation gewünschte Prozessbewegung zu realisieren. Zweckmäßig ist die Bewegungseinrichtung für die Hilfsbewegung der Gießform hergerichtet für eine Heb- und Absenkbarkeit der Aufnahmeeinrichtung und/oder im Verhältnis zur Hauptbewegung für eine seitliche Links-/Rechtsbewegbarkeit der Aufnahmeeinrichtung und/oder ausgebildet für eine Dreh-/Schwenkbarkeit der Aufnahmeeinrichtung. Die Hilfsbewegung kann somit eine aus mehreren Bewegungskomponenten zusammengesetzte/überlagerte Bewegung sein.

Die Prozessbewegung lässt sich vorteilhaft so auslegen, dass einem Schwappen von Süßwarenmasse während des Transports einer Gießform entgegengewirkt wird, insbesondere kann einem Herausschwappen von Süßwarenmasse aus der Gießform entgegengewirkt werden. Vorzugsweise geschieht dies durch angepasste Schrägstellung der Aufnahmeeinrichtung während einer Beschleunigungsphase und anschließender Bewegung.

In einer Schalenformungsstation, die einen Stempel vorsieht, um fließfähige Süßwarenmasse in einer Gießform eine Gestalt zu verleihen, ist eine Prozessbewegung erforderlich, damit der Stempel Süßwarenmasse innerhalb der Gießform verdrängen kann. Um diesen Vorgang des Fließpressens auszuführen ist vorzugsweise der Stempel stationär in der Produktionsstation angeordnet. Relativ zum stationären Stempel führt dann vorzugsweise die Gießform ihrerseits die erforderliche Prozessbewegung aus. Im Wesentlichen ist die Prozessbewegung eine Hubbewegung (Z-Achse). Eine derartige Formungsstation benötigt für einen Stempelvorgang eine gewisse Zeit, in der die Gießform in der Formungsstation verweilt und die Prozessbewegung ausführbar ist. Eine fließfähige Schmelze muss während des Stempelvorgangs soweit erkalten und verfestigen können, dass sie nach einem anschließenden Lösen des Stempels aus der Gießform heraus formstabil bleibt. Weil die Formgebung der Süßwarenmasse während des Stillstands der Gießform erfolgt, muss die Dauer des Stillstands der Gießform angepasst sein an die benötigte Verweilzeit, die der Stempel zur Verfestigung der Süßwarenmasse benötigt. Die Zeitspanne vom Herantransport einer Gießform bis zum Herantransport der folgenden Gießform wird grundsätzlich als Taktzeit bezeichnet, die Zeitdauer nämlich, die zur Durchführung des Arbeitsganges benötigt wird. Um eine hohe Produktionsleistung zu erreichen sind im Prinzip kurze Taktzeiten erwünscht und eine hohe Taktfrequenz wird angestrebt. Eine Taktzeit darf jedoch nicht derart kurz sein, dass die Verweilzeit des Stempels zu gering ist, um die Schmelze ausreichend erkalten und verfestigen zu lassen.

Um einer solchen Formungsstation genügend Zeit zum Stempeln zu verschaffen, ist es bekannt, eine Gießform beim Transport hin zur Formungsstation beschleunigt zu befördern, um Zeit zu gewinnen, damit der Gießform innerhalb der Formungsstation mehr Zeit gelassen werden kann, um den Formungsprozess problemlos durchzuführen und die Schmelze so ausreichend zu verfestigen, dass sie formstabil ist, wenn sich Stempel und Gießform wieder voneinander lösen. Bisher war im Transportsystem eine zusätzliche Vorrichtung zu integrieren, um eine Gießform oder gar mehrere Gießformen beschleunigt in die Formungsstation hinein zu bringen und ihnen dort mehr Zeit für einen Stempelvorgang zu verschaffen. Mit der vorgeschlagenen Maßnahme kann das schienengeführte Schlittenelement an der Transportschiene angekoppelt selbst und individuell entlang der Transportschiene beschleunigt angetrieben einen Zeitvorteil verschaffen, der in der Formungsstation genutzt werden kann, um den Vorgang des Fließpressens der Schmelze mit passender Geschwindigkeit und ausreichender Dauer zum Erkalten von Schmelze auszuführen.

Mit dem erfindungsgemäßen Transportsystem ist innerhalb einer mit gekühltem Stempel arbeitenden Formungsstation eine exakte Stempeltiefe einstellbar, um so eine gute und gleichmäßige Ausprägung des Schalenrandes zu erhalten. Die Stempeltiefe kann alternativ auch durch einen Anschlag begrenzt sein, der die relative Bewegung des Stempels in die Kavität einer Gießform hinein begrenzt.

Eine alternative Formungsstation für Schalen aus Süßwarenmasse ist eine sogenannte Schleuderstation, die ohne Stempel arbeitet. Für das sogenannte Schleuderverfahren werden zwecks Bildung einer offenen Schale die Kavitäten einer Gießform in einer Gießstation mit Süßwarenmasse befüllt und zweckmäßig vor dem Schleudern auch noch einer Rüttelstation zugeführt. Zunächst wird die Gießform um 180° gedreht und anschließend versetzt die Schleuderstation die Gießform in eine Schleuderbewegung, die sich aus vertikalen, horizontalen und kreisförmigen Bewegungen zusammensetzt. Dabei fließt überschüssige Süßwarenmasse aus den Kavitäten heraus in einen unterhalb der Schleuderstation angeordneten Auffangbehälter. Bereits erstarrte Süßwarenmasse bleibt an den Innenwänden der Kavitäten haften und soll eine möglichst gleichmäßige Süßwarenschale ausbilden. Nach dem Schleudervorgang wird die Gießform um 180° um eine Längsachse gedreht, zurück in ihre Ursprungslage. Das erfindungsgemäße Transportsystem eignet sich für die Herstellung von Schalen aus Süßwarenmasse sowohl mittels einer Formungsstation, die mit einem gekühlten Stempel arbeitet, als auch für die Herstellung von Süßwarenschalen mittels einer Schleuderstation.

Des Weiteren kann das Transportsystem nutzbringend zusammen mit einer Abstreichstation zusammenwirken oder ebenso nutzbringend mit einer Ableckwalze.

Eine Ableckwalze kann beispielsweise nach dem Produktionsschritt zum Einsatz kommen, welcher Süßwarenmasse zu einer Schale formt. Wenn die Süßwarenschale beispielsweise durch ein Stempelverfahren geformt werden soll, dann wird für die Durchführung des formgebenden Stempelvorgangs ein gewisser Überschuss an Süßwarenmasse in die Gießform dosiert. Das gewährleistet, dass am Ende des Formungsvorgangs stets überschüssige Süßwarenmasse am Rand der Gießform heraustritt. Der Schalenrand weist dann zu viel Süßwarenmasse auf, so dass der überschüssige Anteil Süßwarenmasse mittels einer Ableckwalze entfernt werden kann und auf diese Weise gleichzeitig ein definierter Schalenrand erzeugbar ist.

Eine Abstreichstation kommt beispielsweise nach einer Gießstation zum Einsatz, die eine Deckelmasse auf eine Füllung aufbringt. In dem Fall soll die Deckelmasse die ganze Füllung abdecken und sich am Schalenrand mit der Süßwarenschale verbinden. Auch zur Herstellung eines Deckels wird üblicherweise ein Überschuss an Süßwarenmasse gegossen. Anschließend wird mit einem Abstreifmesser über die Oberseite der Gießform gestrichen, um die Süßwarenmasse zu verteilen beziehungsweise um die Süßwarenmassen glatt zu streichen, die den Deckel bilden soll. Der überschüssige Teil Süßwarenmasse wird über die Oberseite der Gießform weg geschoben und entfernt.

Mit dem vorgeschlagenen Transportsystem kann die Gießform sowohl zwecks Ableckens eines Schalenrandes in Richtung einer Ableckwalze angehoben werden als auch gegen ein Abstreifmesser angehoben werden, wenn es darum geht, Deckelmasse zu entfernen und eine glatte Deckelfläche herzustellen.

Eine Rüttelstation ist zur Verteilung von Süßwarenmasse in einer Gießform und/oder zur Entfernung von Luftbläschen aus der Süßwarenmasse von Nutzen. Sie kann als Horizontalrüttelung ausgelegt sein. Die Hilfsbewegung beziehungsweise die Prozessbewegung ist dann eine Rüttelbewegung, die parallel zur Transportbewegung (X-Achse) oder seitwärts zur Transportbewegung in derselben Ebene stattfinden kann (Y-Achse). Die Rüttelbewegung kann alternativ in einer Richtung senkrecht zur Transportebene der Gießform (vertikal) erfolgen (Z-Achse). Auch ist eine Mischbewegung horizontal/vertikal möglich, die Anteile in Richtung von X- und/oder Y- plus Z-Achse hat. In einer Wendestation ist eine Gießform um eine Achse bewegbar, beispielsweise um eine Querachse gedreht. Dies wird zum Beispiel benötigt für eine Ausformstation, die fertige Süßwarenartikel aus der Gießform endgültig entfernt. Ebenso muss eine Gießform, die für eine Schleuderstation vorgesehen ist, am Anfang und am Ende eines schalenbildenden Schleudervorgangs um 180°gedreht werden, um überschüssige Süßwarenschmelze zu entleeren. Des Weiteren gibt es Süßwarenartikel, die in sog. Doppelformen hergestellt werden, bestehend aus zwei Gießformteilen. Bei der Herstellung solcher Doppelformprodukte ist eine Schließstation vorgesehen, mit der die aus den zwei Gießformteilen bestehende Gießform (Doppelform) gegeneinander gelegt werden, um einen geschlossenen Hohlraum zu erhalten. Zu dem Zweck muss wenigstens eine von zwei Gießformteilen gedreht werden. Im Falle einer zweiteiligen Gießform kann jedes Gießformteil von einer Aufnahmeeinrichtung gehalten mit einem Schlittenelement beweglich sein, wobei die zusätz-liche Bewegungseinrichtung das jeweilige Gießformteil so positionieren kann, dass es mit dem komplementären Gießformteil eine Hohlform bildet.

In einer Reinigungsstation kann eine leere Gießform gereinigt werden. Vorzugsweise wird die leere Gießform zuvor in der Wendestation auf den Kopf gewendet, damit ihre leeren Kavitäten nach unten offen sind. Die Reinigung geschieht dann zweckmäßig mittels einer Reinigungswalze und/oder einem Reinigungsmesser von unten. Zur Reinigung können darüber hinaus Schlaghämmer zur Anwendung kommen. Vorzugsweise, um aus einer auf den Kopf gewendete Gießform anhaftende Reste von Süßwarenmasse durch Schlaghämmern abzulösen und nach unten herausfallen zu lassen.

Zur Erzeugung der Hilfsbewegung kann am Schlittenelement ein eigenes Bewegungsmittel vorgesehen sein, das einen dafür hergerichteten Antrieb umfasst, mit dem die Hilfsbewegung der Aufnahmeeinrichtung erzeugbar ist.

Vorteilhaft weist die Bewegungseinrichtung zur Erzeugung der Hilfsbewegung der Gießform wenigstens eine Gelenkkette aus Stäben auf, welche teleskopisch oder als Parallelogrammführung ausgebildet ist, oder ausgebildet ist als eine Gelenkkette aus gekreuzten Stäben nach Art von Scherenhebeln eines Scherenhubtisches. Damit ist insbesondere eine Hilfsbewegung als Hubbewegung umsetzbar (Z-Achse). Die Gelenkkette lässt sich aber auch für eine Bewegung seitwärts zur Transportrichtung anordnen (Y-Achse).

Alternativ kann zumindest eines der zwei Schlittenelemente gekoppelt sein mit der Bewegungseinrichtung zur Erzeugung der Hilfsbewegung. So wird die Hilfsbewegung mittels eines Schlittenelements angetrieben.

Einfacherweise kann die Gelenkkette der Bewegungseinrichtung einen Stab mit einem Festgelenk aufweisen und einen bewegbaren Schubstab, wobei der bewegbare Schubstab entweder mittels eines separaten Antriebsmittels schiebbar ist oder der Schubstab mittels eines von zwei Schlittenelementen schiebbar ist.

Als Alternative für eine Gelenkkette ist ein Spindelantrieb, ein System mit schrägen Ebenen oder eine Linearführung verwendbar.

Die Transportschiene kann modular aufgebaut sein aus geraden und gebogenen Schienenmodulen.

Des Weiteren wird es als sehr hilfreich angesehen, wenn die Transportschiene zu einem Transportschienennetz erweitert ist, das Kurven und/oder Weichen und/oder Kreuzungen umfasst. Mittels einer Weiche und eine nebengeordneten Transportschiene kann ein Schlittenelement von einer Hauptschiene auf eine Nebenschiene geleitet werden oder von dort zurück auf die Hauptschiene. So kann eine Überholstrecke für Gießformen bereitgestellt werden oder eine Transportschiene als eine Schleife gebildet werden, um beispielsweise eine Gießform für einen zweiten Produktionsschritt zu einer bereits vorher durchlaufenen Produktionsstation zurück zu transportieren, in der bereits ein erster Produktionsschritt erfolgte.

Ein großer Vorteil des vorgeschlagenen Transportsystems besteht darin, dass im Gegensatz zu einer Süßwarenmaschine mit konventionellem Förderketten-Transportsystem es nicht mehr zwingend erforderlich ist, eine Produktionsstation desselben Typs in mehrfacher Anzahl vorsehen zu müssen. So kann mit dem neuen Transportsystem beispielsweise eine einzige Gießstation vorgesehen sein und dieselbe Gießform kann mehrmals zwecks unterschiedlicher Produktionsschritte zu dieser Gießstation transportiert werden.

Eine Gießstation kann beispielsweise für die Produktion eines Hohlkörpers mit Füllung für verschiedene Produktionsschritte eingesetzt werden, weil eine Gießform in diesem Transportschienennetz erneut zu der Gießstation transportierbar ist, zu der sie zuvor bereits für einen früheren Produktionsschritt transportiert worden war.

Für einen Hohlkörper mit Füllung kann auf diese Weise als erstes die Süßwarenmasse in die Gießform dosiert werden, mit der die Schale geformt wird. Wenn die Schale später in der Produktion mit einer Füllung versehen ist, muss abschließend noch ein Deckel auf die Füllung gegossen werden, der sich mit dem Schalenrand dicht verbinden soll und vorzugsweise aus der identischen Süßwarenmasse besteht, aus der auch die Schale hergestellt ist. Mit dem vorgeschlagenen Transportsystem kann zum Zweck des Deckelgießens dieselbe Gießstation für einen zweiten Produktionsschritt bei der Herstellung eines Süßwarenartikels eingesetzt werden. Anders als bei einer Süßwarenmaschine mit Förderkette muss zum Deckelgießen keine zweite Gießstation vorgesehen werden. Die Süßwarenmaschine kann aufgrund des neuen Transportsystems deutlich kompakter ausgebildet sein. Jede einzelne Produktionsstation lässt sich dadurch effizienter nutzen.

Eine Wendestation kann ebenfalls mehrfach zum Einsatz kommen, so dass eine zweite Wendestation verzichtbar ist. Das neue Transportsystem ermöglicht es, eine Gießform für verschiedene Produktionsschritte mehrmals zu derselben Wendestation zu transportieren. Eine Form muss beispielsweise gewendet werden, wenn ein Süßwarenartikel fertig ist und aus der Gießform entfernt werden soll. Die Gießform wird zu dem Zweck auf den Kopf gedreht, so dass der Süßwarenartikel nach unten aus der Gießform herausfallen kann. Im weiteren Verlauf muss die Gießform wieder zurück gewendet werden, was mittels des vorgeschlagenen Transportsystems geschehen kann, indem die Gießform nochmals zu derselben Wendestation transportiert werden kann, mit der sie zuvor auf den Kopf gedreht wurde.

Für andere Produktionsstationen, die in einer konventionellen mit Förderketten-Transportsystem betriebenen Süßwarenmaschine in mehrfacher Anzahl vorgehalten werden müssen, gilt gleichermaßen, dass mit dem neuen Transportsystem eine Gießform mehrfach zu einer einzigen Produktionsstation transportiert werden kann, um darin unterschiedliche Produktionsschritte durchzuführen. So lässt sich aufgrund des vorgeschlagenen Transportsystems die Anzahl der Produktionsstationen insgesamt reduzieren und jede einzelne Produktionsstation kann effektiver genutzt werden.

Um das Transportschienennetz effektiv zu gestalten ist es so hergerichtet, dass die Produktionsstationen der Süßwarenmaschine zweckmäßig zueinander angeordnet sind. Hierfür werden unterschiedliche Layouts für das Transportschienennetz vorgeschlagen. Es kann ein Ring-Layout aufweisen oder ein Reihen-Layout, Bus-Layout, Stern-Layout oder Mischformen der genannten, wie ein Bus-Ring-Layout, Stern-Ring-Layout, Stern-Bus-Layout, Ring-Parallel-Layout oder Reihen-Parallel-Layout.

Zum individuellen Antrieb des Schlittenelements entlang der Transportschiene kann ein Elektromotor vorgesehen sein, wobei der Elektromotor am Schlittenelement angeordnet sein kann. Alternativ kann ein Linearmotor ausgebildet sein, mit dem Schlittenelement als Läufer und der Transportschiene als Stator ausgebildet, sowie mit einem am Schlittenelement angeordneten Mittel, mit dem ein Läufer-Magnetfeld erzeugbar ist und mit einem an der Transportschiene vorgesehen Mittel, mit dem ein Stator-Magnetfeld erzeugbar ist.

Nutzbringend ist außerdem, wenn die Steuereinrichtung wenigstens eine Verarbeitungseinheit (Prozessor) umfasst, dass die Verarbeitungseinheit zur Ausführung einer Steuerungssoftware und zur Verarbeitung von Informationen hergerichtet ist, und dass der Verarbeitungseinheit wenigstens ein Datenspeicher zugeordnet ist.

Nützlich ist es auch, wenn in der Verarbeitungseinheit die Daten aller im Transportsystem befindlichen Schlittenelemente verarbeitbar sind, und dass die Schlittenelement-Daten wenigstens die Positionsdaten der Schlittenelemente relativ zur Transportschiene umfassen und/oder Geschwindigkeitsdaten der Schlittenelemente relativ zur Transportschiene umfassen und/oder Daten umfassen, welche sich darauf beziehen, welcher Aufnahmeeinrichtung ein Schlittenelement zugeordnet ist.

Ein weiterer Nutzen wird darin gesehen, dass in der Verarbeitungseinheit die Gießform betreffende Daten verarbeitbar sind, die sich beziehen auf Informationen, ob eine Gießform einen Prozessschritt durchlaufen oder ausgelassen hat und/oder auf prozessrelevante Daten, wie die Temperatur einer Gießform oder eine Zeitspanne, welche die Gießform in einem Produktionsschritt verbracht hat.

Weiter verbessern lässt sich das Transportsystem, wenn eine Eingabeeinheit vorgesehen ist, mittels der in die Steuerungssoftware eingebbar ist, in welcher Reihenfolge eine Gießform zu einzelnen Produktionsstationen zu transportieren ist, und dass diese Reihenfolge als Prozessplan im Datenspeicher ablegbar ist.

Zweckmäßig ist darüber hinaus, wenn in den Prozessplan für jede Gießform wenigstens ein Parametersatz speicherbar ist, der sich auf einen Produktionsschritt bezieht, welchen die Gießform zu durchlaufen hat.

Vorteilhaft ist die Transportschiene in der Steuerungssoftware virtuell abgebildet und entlang der Transportschiene sind prozessrelevante Auslöserpunkte vorgesehen, wobei die reale Transportbewegung eines Schlittenelements als virtueller Schlittenpositionspunkt in der Steuerungssoftware mitbewegt wird, und wobei softwaregesteuert ein Prozess aktivierbar ist, wenn ein Schlittenpositionspunkt einen Auslöserpunkt erreicht.

Als eigene Erfindung wird auch die Aufnahmeeinrichtung angesehen, die so hergerichtet ist, dass sie sich an wenigstens ein Schlittenelement koppeln lässt.

Vorzugsweise weist die Aufnahmeeinrichtung für die Gießform ein Rahmengestell auf. Alternativ kann die Aufnahmeeinrichtung als eine rahmenlose Auflage ausgebildet sein, wobei sie dann vorzugsweise geeignete Positionierhilfen hat, die einem seitlichen Verrutschen oder Herunterrutschen einer Gießform von der Auflage entgegenwirken. Wenn die Aufnahmeeinrichtung ein Rahmengestell hat, kann dieses beispielsweise rechteckig oder trapezförmig sein und dazu geeignet sein, eine Gießform aufzunehmen. Zweckmäßig ist jede Aufnahmeeinrichtung so hergerichtet, dass die Oberseite der Gießform vollkommen frei ist.

In einer bevorzugten Ausführungsform ist das Rahmengestell weitgehend bodenfrei, wobei das Rahmengestell lediglich an seinen Ecken oder Kanten Auflageflächen aufweist. Es sind mindestens zwei Auflageflächen zur Aufnahme der Gießform vorgesehen. Die Auflageflächen können bevorzugt aus einem Kunststoff sein und an das Rahmengestell angeschraubt, angeklebt oder eingeklemmt sein. Das Rahmengestell kann auch einteilig mit der Auflagefläche ausgebildet sein. Zur Gewichtseinsparung kann das Rahmengestell aus einem Kunststoff bestehen.

Die Auflagefläche kann eben sein und/oder Erhebungen aufweisen. Bei einer ebenen Auflagefläche liegt die Gießform mit ihren Seitenkanten an den jeweiligen Ecken des Rahmengestells an. Das Rahmengestell umgreift dabei die Gießform derartig, dass die Gießform in einer festen Position gehalten ist. Alternativ kann eine Erhebung an der Auflagefläche vorgesehen sein, die dafür sorgt, dass die Gießform zusätzlich gestützt ist und in Längs- und Querrichtung nicht verschiebbar ist. Die Gießform steht dabei mit den Erhebungen der Auflagefläche in Eingriff. Wenn die Gießform Querstreben aufweist, können die Erhebungen zwischen zwei Querstreben anliegen oder an Seitenkanten der Gießform anliegen. Alternativ weist die Auflagefläche einen Magneten auf, der mit einem an der Gießform angeordneten Magneten wechselwirkt und die Gießform in dem Rahmengestell in Position hält. Außerdem kann die Auflagefläche relativ zum Rahmengestell beweglich angeordnet sein, insbesondere in Bezug zur Transportrichtung auf- und abfahrbar ausgebildet sein.

In einer bevorzugten Ausführungsform ist das Rahmengestell über seinen Umfang nicht geschlossen (offen). Vorzugsweise ist das Rahmengestell an seinen Längskanten offen, wobei die Längskanten des Rahmengestells bevorzugt 1/3 der Längskante der Gießform umgreifen. Besonders bevorzugt umgreifen die Längskanten des Rahmengestells weniger als 1/3 der Längskanten der Gießform.

Das Rahmengestell kann zur Aufnahme unterschiedlicher großer Gießformen in der Länge und/oder Breite veränderlich ausgebildet sein. Dazu können die Seitenkanten des Rahmengestells auf einer Rahmenschiene verschiebbar angeordnet und in mehreren Positionen einrastbar sein. Eine Seitenkante eines Rahmengestells weist dazu beispielsweise an der Unterseite Einkerbungen auf, die mit einer auf einer Gegenseite der Rahmenschiene befindlichen Zahnstange einrasten. Alternativ befinden sich auf der Rahmenschiene Stoppelemente, beispielsweise in Form von Kunststoffblöcken, die die Kanten des Rahmengestells in einer Position sichern. Alternativ können mindestens zwei Teile einer Seitenkante eines Rahmengestells über eine Feder gespannt sein, wobei beim Ausdrücken der Seitenkanten eine Gießform in das Rahmengestell einlassbar und beim Eindrücken der Seitenkanten die Gießform zwischen den Seitenkanten und/oder der Auflagefläche und der Gießform einklemmbar ist. Nachfolgend ist die Erfindung von mehreren Figuren beschrieben, es zeigen:
- Fig. 1: ein Schema eines erfindungsgemäßen Transportsystems, integriert in eine industrielle Süßwarenmaschine, die mehrere Produktionsstationen umfasst,
- Fig. 2: ein Schema eines alternativen Transportsystems, mit zusätzlicher Bewegungseinrichtung für eine Hilfsbewegung,
- Fig. 3: ein weiteres Ausführungsbeispiel eines erfindungsgemäßen Transportsystems,
- Fig. 4: eine Weiterbildung des Transportsystems gemäß Fig. 3,
- Fig. 5: ein Ausschnitt eines Transportsystems mit Transportschiene und Schlittenelement sowie Aufnahmeeinrichtung inkl. Gießform,
- Fig. 6: ein Ausschnitt eines Transportsystems,
- Fig. 7a/7b: ein Ausschnitt eines Transportsystems mit Transportschiene sowie mit einer Aufnahmeeinrichtung, die von zwei Schlittenelementen getragen ist,
- Fig. 8: eine Anwendung des Transportsystems gemäß Fig. 7a,
- Fig. 9: eine Weiterbildung des Transportsystems auf Basis der Ausführung gemäß Fig. 7a,
- Fig. 10: eine weitere Anwendung des Transportsystems gemäß Fig. 7a,
- Fig. 11: eine Alternative eines Transportsystems mit zwei Schlittenelementen pro Aufnahmeeinrichtung,
- Fig. 12: eine weitere Alternative eines Transportsystems mit zwei Schlittenelementen pro Aufnahmeeinrichtung,
- Fig. 13a/13b: eine Alternative eines Transportsystems mit drei Schlittenelementen pro Aufnahmeeinrichtung,
- Fig. 14a/14b: ein alternatives Transportsystem mit schwenkbarer Aufnahmeeinrichtung gelagert an einem Schlittenelement,
- Fig. 15a/15b: ein Transportsystem mit zusätzlicher Bewegungseinrichtung für eine Hubbewegung,
- Fig. 16: ein Transportsystem mit zusätzlicher Bewegungseinrichtung, ebenfalls für eine Hubbewegung,
- Fig. 17: ein Transportsystem mit zusätzlicher Bewegungseinrichtung, für eine Rotation einer Gießform,
- Fig. 18: eine Anwendung eines Transportsystems mit Bewegungseinrichtungen zur Rotation zweier Gießformhälften gegeneinander,
- Fig. 19: ein Ausschnitt eines Transportsystems mit Transportschiene, Schlittenelement sowie zusätzlicher Bewegungseinrichtung für eine Hilfsbewegung,
- Fig. 20-25: beispielhafte Querschnitte der Transportschiene sowie Querschnitte des Schlittenelements sowie deren Anordnung im Raum,
- Fig. 26: ein Ausschnitt mit zwei parallelen Transportschienen und horizontal beweglichen Schienenstücken,
- Fig. 27: ein Ausschnitt mit zwei parallelen Transportschienen und lotrecht beweglichen Schienenstücken,
- Fig. 28: zwei Transportschienen sowie ein Schlittenelement mit doppel-T-förmigem Querschnitt,
- Fig. 29: zwei Transportschienen sowie ein Schlittenelement mit m-förmigem Querschnitt,
- Fig. 30: ein Transportsystem mit einer modularen Transportschiene, zusammengesetzt aus Schienenstücken, die zwecks Bildung des Primärteils eines Linearmotors hergerichtet sind,
- Fig. 31: ein Transportschienennetz in Reihen-Layout,
- Fig. 32: ein Transportschienennetz in Ring Layout,
- Fig. 33: ein Transportschienennetz in Bus-Layout,
- Fig. 34: ein Transportschienennetz in Stern-Layout,
- Fig. 35: ein Transportschienennetz in Bus-Ring-Layout,
- Fig. 36: ein Transportschienennetz in Stern-Ring-Layout,
- Fig. 37: ein Transportschienennetz in Stern-Bus-Layout,
- Fig. 38: ein Transportschienennetz in Ring-Parallel-Layout,
- Fig. 39: ein Transportschienennetz in Reihe-Parallel-Layout
- Fig. 40a-c: einen Ausschnitt einer Transportschiene mit einer Aufnahmeeinrichtung, die von zwei Schlittenelementen getragen ist und eine zusätzliche Bewegungseinrichtung für eine Hilfsbewegung in Y-Richtung umfasst,
- Fig. 41: eine schematische Darstellung der Steuereinrichtung,
- Fig. 42: ein Ausführungsbeispiel für eine rahmenlose Aufnahmeeinrichtung,
- Fig. 42a: einen Ausschnitt der Aufnahmeeinrichtung gemäß Fig. 42a mit einem Beispiel für eine Positionierhilfe,
- Fig. 42b: einen Ausschnitt der Aufnahmeeinrichtung gemäß Fig. 42a mit einer alternativen Positionierhilfe.

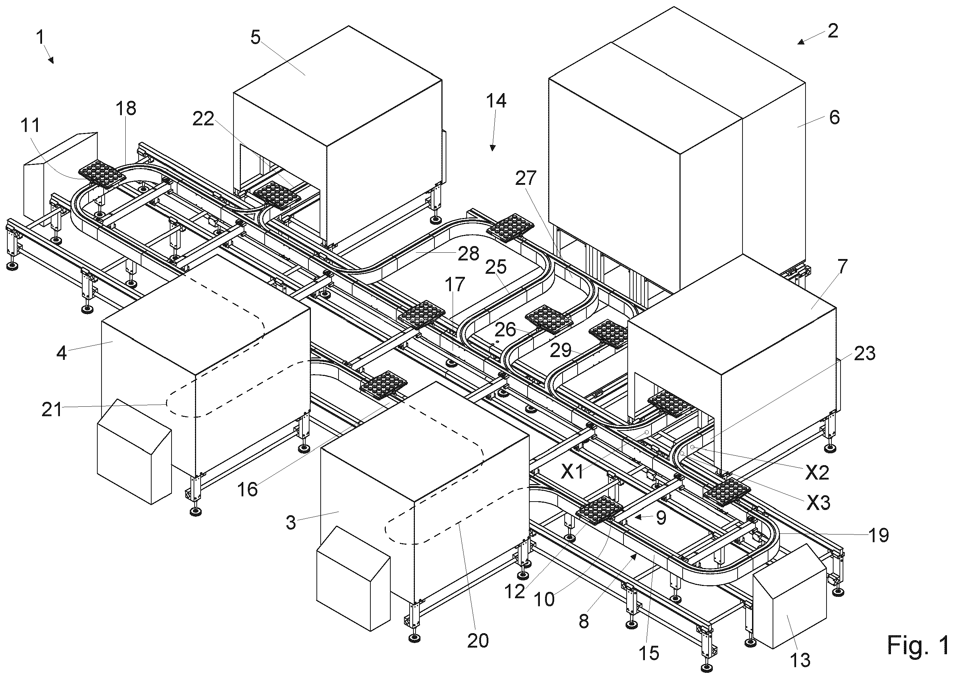

Fig. 1 zeigt ein erstes Ausführungsbeispiel eines erfindungsgemäßen Transportsystems 1 schematisch. Zum besseren Verständnis ist das Transportsystem 1 zusammen mit Teilen einer industriellen Süßwarenmaschine 2 dargestellt, in die es integriert ist. Die Süßwarenmaschine 2 umfasst mehrere Produktionsstationen, hier eine erste Gießstation 3, eine Schalenformungsstation 4, eine zweite Gießstation 5, eine Kühlstation 6 und eine Ausformungsstation 7. Im vorliegenden Beispiel sind solche Produktionsstationen vorgesehen, die für die Herstellung eines hohlen Süßwarenartikels mit einer Füllung geeignet sind.

Das vorgeschlagene Transportsystem 1 umfasst eine Transportschiene 8 sowie eine Antriebseinrichtung 9 mit einer Anzahl schienengeführter Schlittenelemente 10. Das Schlittenelement 10 läuft auf der Transportschiene 8. An dem Schlittenelement 10 ist eine Aufnahmeeinrichtung 11 vorgesehen, mit welcher wenigstens eine Gießform 12 aufnehmbar ist. Mit dem schienengeführten Schlittenelement 10 ist eine Transportbewegung erzeugbar, um die Gießform 12 entlang der Transportschiene 8 zu einer der Produktionsstationen (3, **4,** 5, 6, 7) zu transportieren. Entlang der Transportschiene 8 kann das Schlittenelement 10 individuell bewegt werden und ist zu diesem Zweck mittels der Antriebseinrichtung 9 eigens antreibbar.

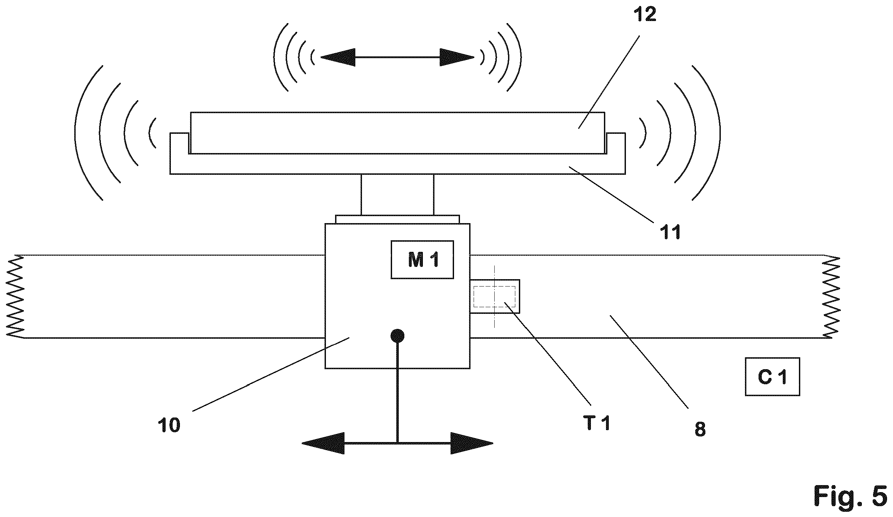

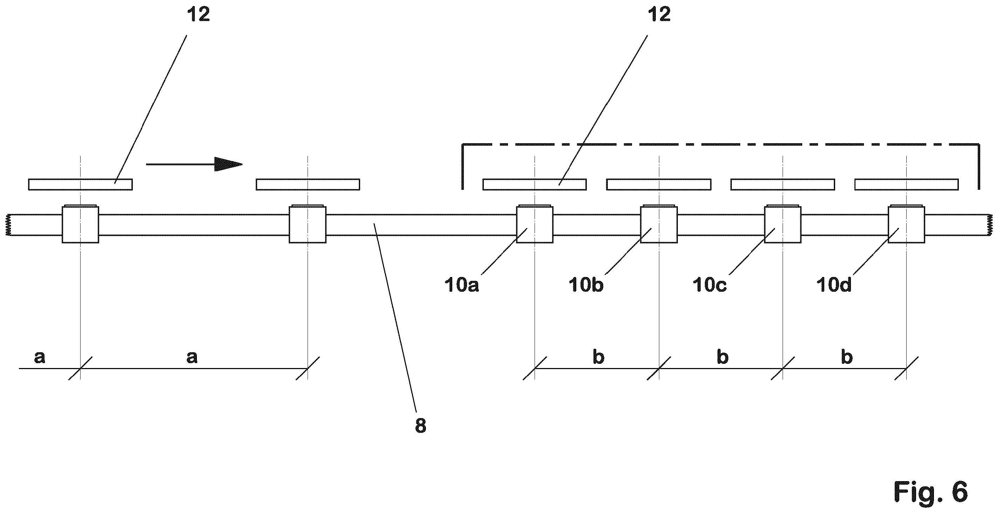

Darüber hinaus ist eine Steuereinrichtung 13 vorgesehen, mittels welcher entlang der Transportschiene 8 eine Hauptbewegung für das Schlittenelement 10 steuerbar ist. Die Hauptbewegung wird von dem Schlittenelement 10 zusammen mit der Aufnahmeeinrichtung 11 ausgeführt, um letztlich die darauf zu transportierende Gießform 12 zu bewegen. Die Hauptbewegung erfolgt in Transportrichtung zu den jeweiligen Produktionsstationen (3, **4,** 5, 6, 7). Außerdem sieht das Transportsystem 1 vor, mittels der Steuereinrichtung 13 zusätzlich eine Hilfsbewegung in die Aufnahmeeinrichtung 11 übertragen zu können, um die Gießform 12 für bestimmte Produktionsschritte passend bewegen zu können. Die Hilfsbewegung kann eine einfache Bewegung sein oder eine komplexe Bewegung, die sich aus unterschiedlichen Bewegungskomponenten zusammensetzt. In der einfachsten Form kann die Hilfsbewegung in der Richtung der Transportschiene stattfinden und der Hauptbewegung überlagert sein, wie weiter unten anhand der Figuren 5 und 6 beispielhaft erläutert.

Die Hilfsbewegung ist zweckmäßig, weil es für bestimmte Produktionsschritte erforderlich ist, die Gießform 12 relativ zur Produktionsstation in bestimmter Weise bewegen zu können.

Zum Transportsystem 1 gehört die erwähnte Transportschiene 8, die gemäß Fig. 1 zu einem Transportschienennetz 14 ausgebaut ist. Im vorliegenden Beispiel hat das Schlittenelement 10 Rollen (nicht dargestellt), die auf einer nach oben gerichteten Lauffläche der Transportschiene 8 stehen und abrollen. Die Transportschiene 8 ist sehr tragfähig. Sie eignet sich für hohe Lasten, beispielsweise eine große Gießform, die viele Süßwarenartikel auf einmal enthält und vergleichsweise schwer ist.

Das Transportschienennetz 14 hat gemäß Fig. 1 ein Bus-Layout mit einer ringförmigen Hauptschiene 15, die zwei lange Schienenstücke 16 und 17 aufweist, die gerade verlaufen. Die geraden Schienenstücke der Hauptschiene sind durch zwei 180°-Kurven 18 und 19 verbunden und bilden so den Ring. An beiden geraden Schienenstücken der Hauptschiene sind seitliche Abzweigschienen vorgesehen. Es sind Abzweigschienen vorhanden, die in eine der Produktionsstationen und zurück zur Hauptschiene führen, nämlich eine Abzweigschiene 20 durch die erste Gießstation 3, eine Abzweigschiene 21 durch die Schalenformungsstation 4, eine Abzweigschiene 22 durch die zweite Gießmaschine 5 und eine Abzweigschiene 23 durch die Ausformstation 7. Die Abzweigschienen 20, 21 und 23 verlaufen in einer Schleife, die an der Hauptschiene beginnt und endet. Die Gießform 12 kann diese Abzweigschienen 20, 21 und 23 in einer Richtung durchlaufen. Zwischendrin stoppt die Gießform in der jeweiligen Produktionsstation, um den dort vorgesehenen Produktionsschritt durchzuführen. Anders funktioniert die Abzweigschiene 22, die in die zweite Gießmaschine geht. Die Abzweigschiene 22 ist keine Schleife sondern sie endet quasi, wie eine Sackgasse in der Produktionsstation. Eine Gießform kann vorwärts auf der Abzweigschiene 22 in die Produktionsstation hinein bewegt werden und muss später rückwärts heraus bewegt werden, wenn der Produktionsschritt fertig ausgeführt ist. Die Transportschiene kann in einer Schleife durch eine Produktionsstation geführt sein oder als Sackgasse hin und hinaus. Beide Konzepte können je nach Bedarf angewandt werden. Das Konzept, eine Sackgasse vorzusehen, ist etwas platzsparender. Die Produktionsstation kann schmaler ausgeführt sein und es wird eine geringere Schienenlänge benötigt als bei einer Abzweigschiene, die in einer Schleife geführt ist.

Fig. 1 zeigt einige Produktionsstationen einer Süßwarenmaschine beispielhaft. Es handelt sich um Produktionsstationen, die zur Herstellung gefüllter Hohlkörper genutzt werden könnten. Das Schema ist allerdings sehr vereinfacht und lässt andere Produktionsstationen weg, die eine Süßwarenmaschine zur Herstellung gefüllter Hohlkörper üblicherweise aufweist. Anhand des Schemas wird aber deutlich, dass die Gießform 12 in der richtigen Reihenfolge und dennoch variabel den nötigen Produktionsschritten zugeführt werden kann. So kann eine Gießform beispielsweise ganz individuell kürzer oder länger in der Kühlstation verbleiben und später wieder in den Transport gegeben werden.

Im Bereich der Kühlstation 6 sind im gezeigten Ausführungsbeispiel Abzweigschienen 25 und 26 vorgesehen, die von dem geraden Schienenstück 17 der ringförmigen Hauptschiene 15 weg in Richtung der Kühlstation 6 führen. Außerdem verläuft vor der Kühlstation eine Nebenschiene 27 parallel zum Schienenstück 17 der Hauptschiene. Die Nebenschiene 27 hat selbst zwei Nebenschienenabzweige 28 und 29 von dem geraden Schienenstück 17 der Hauptschiene. Die Nebenschiene bildet mit den Nebenschienenabzweigen quasi eine Schleife, die an der Hauptschiene beginnt und endet. Die anderen beiden Abzweigschienen 25 und 26 verlaufen als Querverbindung zwischen dem Schienenstück 17 der Hauptschiene und der Nebenschiene 27.

Die Querverbindungen sowie der Nebenschienenabzweig 29 befinden sich vor Kühlstation 6. Die Kühlstation verfügt über eine Vorrichtung (nicht dargestellt), die dazu hergerichtet ist, Gießformen von dem Schlittenelement, respektive von der Aufnahmeeinrichtung zu entnehmen und in die Kühlstation zu überführen.

Zumindest die als Querverbindung verlaufenden Abzweigschienen können als Pufferraum dienen, um zeitweilig eine Gießform 12 dort zu parken. So können andere Schlittenelemente mit Gießformen die Hauptschiene beziehungsweise die Nebenschiene frei passieren.

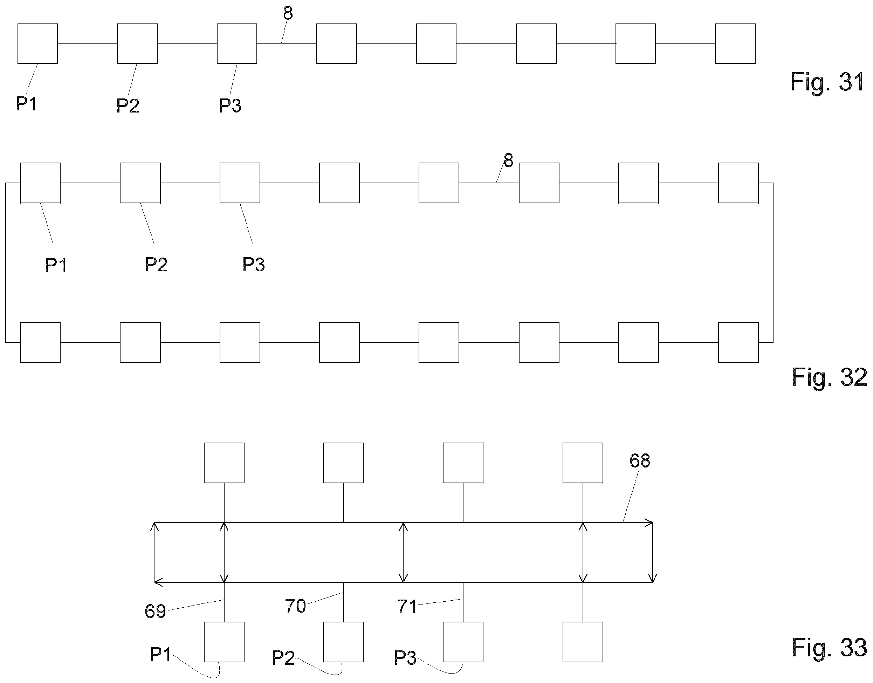

Wie anhand von Fig. 1 erkennbar, dient das Transportsystem 1 insgesamt dazu, Gießformen 12 durch die Süßwarenmaschine 2 zu transportieren und zwar zu den jeweiligen Produktionsstationen (3, 4, 5, 6, 7), welche einen entsprechenden Produktionsschritt ausführen können. Die Reihenfolge in der eine Gießform 12 zu den Produktionsstationen transportiert wird ist aufgrund des vorgeschlagenen Transportschienennetzes 14 besonders variabel. Das Transportschienennetz 14 ist zudem erweiterbar und ausbaubar. Es kann von unterschiedlichen Netz-Layouts profitieren. Beispiele für Netz-Layouts sind weiter unten beschrieben (Figs. 31-39), sowie auch Beispiele dafür, wie verschiedene Layouts des Transportschienennetzes miteinander kombiniert werden können.

Grundsätzlich kann eine Gießform 12 wahlweise in beide Richtungen entlang der Transportschiene (8, 15, 16, 17, 18, 19, 25, 26, 27, 28, 29) vor oder zurück bewegt werden. Sie kann an einer Gabelung der Transportschiene wahlweise auf der Hauptschiene 15 bleiben oder auf eine Abzweigschiene oder Nebenschiene transportiert werden.

Neben einer variablen Streckenführung innerhalb eines Transportschienennetzes 14 ist ein anderer wichtiger Aspekt des Transportsystems der, dass die oben bereits erwähnte Hilfsbewegung in die Gießform 12 übertragen werden kann. Wie oben beschrieben, findet die einfachste Form der Hilfsbewegung in Richtung der Transportschiene 8 statt. Dies kann beispielsweise ein hin und her Rütteln in Transportschienenrichtung sein. Zu dem Zweck wird das Schlittenelement mit der Aufnahmeeinrichtung, welche die Gießform trägt, mit entsprechender Frequenz entlang der Transportschiene vor und zurück bewegt, um ein Rütteln mit der gewünschten Frequenz und Amplitude zu erzeugen. In konventionellen Süßwarenmaschinen mit Kettenantrieb ist zum Rütteln eine eigene Rüttelstation erforderlich. Durch das Rütteln wird Süßwarenmasse in einer Gießform verteilt, die zuvor mittels einer Gießmaschine eindosiert worden ist. Außerdem kann das Rütteln unerwünschte Luftbläschen zur Oberfläche befördern, falls solche in der Süßwarenmasse eingeschlossen sind. Ggf. lässt sich Luft, die in der Süßwarenmasse eingeschlossen sein kann, durch Rütteln entfernen. Aufgrund des erfindungsgemäßen Transportsystems kann nun eine separate Rüttelstation eingespart werden.

Eine weitere Anwendung einer Hilfsbewegung ist eine Gruppenbildung aus mehreren Schlittenelementen 10, beziehungsweise mehreren Gießformen 12, wie unten noch anhand von Fig. 6 erläutert werden wird. Es gibt Produktionsschritte bei der Herstellung von Süßwarenartikeln, für die günstigerweise mehr Zeit gewährt werden sollten, als bei einer üblichen Taktung einer Süßwaremaschine zur Verfügung steht. Um das zu ermöglichen gibt es Produktionsstationen, in die hinein mehrere Gießformen in beschleunigter Weise zugeführt werden können, um dadurch einen Zeitgewinn zu erzielen. Für konventionelle Süßwarenmaschinen ist eine eigene Station aus DE 10 2005 018 416 A1 bekannt, welche nur zur Gruppenbildung von Gießformen 12 dient, um den erwähnten Zeitgewinn zu realisieren. Alle Gießformen einer Gruppe, die gleichzeitig demselben Produktionsschritt unterworfen werden sollen, steht aufgrund des Zeitgewinns etwas mehr Zeit zur Durchführung des jeweiligen Prozesses zur Verfügung. Ein anschließender Transport der gruppierten Gießformen aus der Produktionsstation heraus löst die Gruppierung wieder auf. Dies kann ebenfalls beschleunigt stattfinden, was weiteren Zeitgewinn für den Produktionsschritt ermöglicht.

Die Herstellung eines Süßwarenartikels in Form eines gefüllten Hohlkörpers beinhaltet die Herstellung der Schale aus einer ersten Süßwarenmasse, anschließend eine Kühlung der Schale, dann das Einbringen einer Füllung. Anschließend muss ein Deckel gegossen werden, der sich mit dem Schalenrand verbindet und die Füllung dicht einschließt. Zu dem Zweck wird für den Deckel häufig dieselbe Süßwarenmasse verwendet, wie für die Schale.

Im Gegensatz zu einer konventionellen Süßwarenmaschine mit Förderkette, ermöglicht es das vorgeschlagene Transportsystem 1, eine Gießform 12 während der Herstellung eines Süßwarenartikels mehrmals zu derselben Produktionsstation zu transportieren, um darin zu unterschiedlichen Stadien der Produktion unterschiedliche Produktionsschritte an einem entstehenden Süßwarenartikel auszuführen. In einer konventionellen Süßwarenmaschine mit Förderkette sind Produktionsstationen in Reihe angeordnet. Üblicherweise werden mehrere Gießstationen vorgesehen, obwohl beispielsweise für einen Deckel dieselbe Süßwarenmasse gegossen werden muss, wie zuvor für die Schale. In einer konventionellen Süßwarenmaschine reicht eine einzige Gießmaschine selbst dann nicht aus, wenn dieselbe Süßwarenmasse für verschiedene Produktionsschritte an einem Süßwarenartikel benötigt wird.

Das erfindungsgemäße Transportsystem 1 ermöglicht es gemäß Fig. 1 eine erste Gießstation 3 vorzusehen, mit der zunächst eine erste Süßwarenmasse in die Gießform 12 eingefüllt wird, um damit eine Schale herzustellen, wobei dieselbe erste Gießstation 3 später nochmals zum Einsatz kommen kann, um einen zweiten Produktionsschritt durchzuführen, für den dieselbe erste Süßwarenmasse verwendet wird.

Zunächst wird die Gießform 12 jedoch aus der ersten Gießstation 3 heraus entlang der Transportschiene 8 zur Schalenformungsstation 4 transportiert, in der die Schale hergestellt wird. Im vorliegenden Beispiel ist die Schalenformungsstation 4 als eine Stempelstation hergerichtet. Sie verfügt über einen Stempel (nicht dargestellt), der Stempel kann in die mit Süßwarenmasse gefüllte Gießform 12 eingetaucht werden, um dadurch die Süßwarenmasse zu verdrängen. Durch die Verdrängung verteilt sich die Süßwarenmasse zwischen der Stempelaußenfläche und der Innenfläche der Gießform. Der entstehende Hohlraum bildet ein schalenförmiges Volumen, so dass auf diese Weise eine Schale aus Süßwarenmasse geformt werden kann.

Die geformte Schale wird anschließend von der Schalenformungsstation 4 entlang der Transportschiene (21, 18, 22) zur zweiten Gießmaschine 5 weitertransportiert oder zunächst zur Kühlstation transportiert und erst nach ausreichender Verfestigung zur zweiten Gießmaschine transportiert. Mit der zweiten Gießmaschine 5 wird eine zweite Süßwarenmasse als Füllung des Süßwarenartikels in die Schale dosiert.

In die Kühlstation 6 kann die Gießform 12 nach jedem Produktionsschritt hinein transportiert werden, um dort abgekühlt zu werden und zu verfestigen. Zu gegebener Zeit, wenn ein gewünschter Grad der Verfestigung eingetreten ist, kann die Gießform 12 aus der Kühlstation 6 heraus und entlang der Transportschiene 8 zu der nächsten Produktionsstation transportiert werden, um den nächsten erforderlichen Produktionsschritt durchzuführen. Falls nach einem Produktionsschritt keine Verfestigung in der Kühlstation erforderlich sein sollte, kann die Gießform auf der Hauptschiene an der Kühlstation vorbei zu einer anderen Produktionsstation transportiert werden.

Wenn die Schale mit der Füllung versehen worden ist, wird anschließend noch die bereits erwähnte Deckelmasse auf die Füllung gegossen. Zu diesem Zweck wird die Gießform 12 nochmals zur ersten Gießstation 3 transportiert, die dann dieselbe erste Süßwarenmasse, wie zuvor für die Schale, nunmehr als Deckelmasse auf die Füllung gießt. Die Öffnung der Schale soll damit rundum dicht verschlossen werden.

Wenn es zweckmäßig ist, den Schalenrand vorher anzuwärmen, um eine gute Verbindung zwischen Schalenrand und Deckel herzustellen, kann ggf. eine geeignete Produktionsstation dafür vorgesehen werden, die den Schalenrand anschmelzen kann (nicht dargestellt).

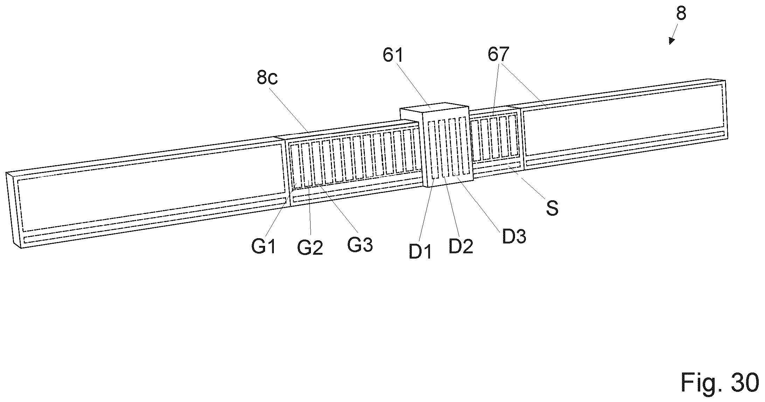

Entlang der Transportschiene 8 sind Auslöserpunkte vorgesehen. In der Steuereinrichtung 13 kann eine Steuerungssoftware das Transportschienennetz virtuell abbilden und entlang der Transportschiene prozessrelevante Auslöserpunkte abbilden. Bei einem Auslöserpunkt handelt es sich um bestimmte Stellen an der Transportschiene, beispielsweise den Auslöserpunkt X1 am Eingang in die Ausformungsstation 7. Des Weiteren muss die Schlittenelementposition detektiert werden können, beispielsweise so, wie weiter unten anhand von Fig. 30 erläutert. Wenn nun ein Schlittenelement bei seiner Bewegung entlang der Transportschiene den Auslöserpunkt X1 am Eingang der Ausformungsstation 7 erreicht, kann die Steuereinrichtung 13 eine passende Prozessbewegung auslösen, welche in der entsprechenden Produktionsstation für die hineinbewegte Gießform benötigt wird.

Auch am Ausgang aus einer Produktionsstation kann ein Auslöserpunkt vorgesehen sein, wie der Auslöserpunkt X2 am Ausgang der Ausformungsstation 7. Hier wird das Verlassen einer Gießform erfasst. Stromabwärts kann ein weiterer Auslöserpunkt X3 vorgesehen sein, dem Informationen darüber zugeordnet sind, ob im folgenden Teil der Transportschiene 8 Platz für eine weitere Gießform ist.

Grundsätzlich können an beliebigen Stellen innerhalb des Transportschienennetzes Auslöserpunkte vorgesehen sein, die mittels der Steuereinrichtung das Auslösen oder Stoppen von Prozessen bewirken können oder auf den weiteren Transport oder einen Stillstand der Gießform programmgesteuert Einfluss nehmen können. Welche Funktion ein Auslöserpunkt auslöst kann davon abhängig sein, aus welcher Richtung sich ein Schlittenelement heranbewegt. Das Transportsystem kann so gestaltet sein, dass eine Gießform aus zwei Richtungen in eine Produktionsstation hinein beziehungsweise hinaus bewegt werden kann. Auslöserpunkte an Eingang und Ausgang können so ausgelegt sein, dass beiderlei Funktion übernommen werden können, je nachdem aus welcher Richtung die Gießform ankommt, d. h. entweder den benötigten Prozess auslösen oder das anschließende Verlassen der Gießform detektieren.

Die reale Transportbewegung eines Schlittenelements kann in der Steuerungssoftware als virtueller Schlittenpositionspunkt mitbewegt werden, da sie sich exakt detektieren lässt, wie oben erwähnt. Dadurch sind softwaregesteuert Prozesse oder Transportaufgaben überall dort aktivierbar, wo ein Schlittenpositionspunkt einen Auslöserpunkt erreicht.

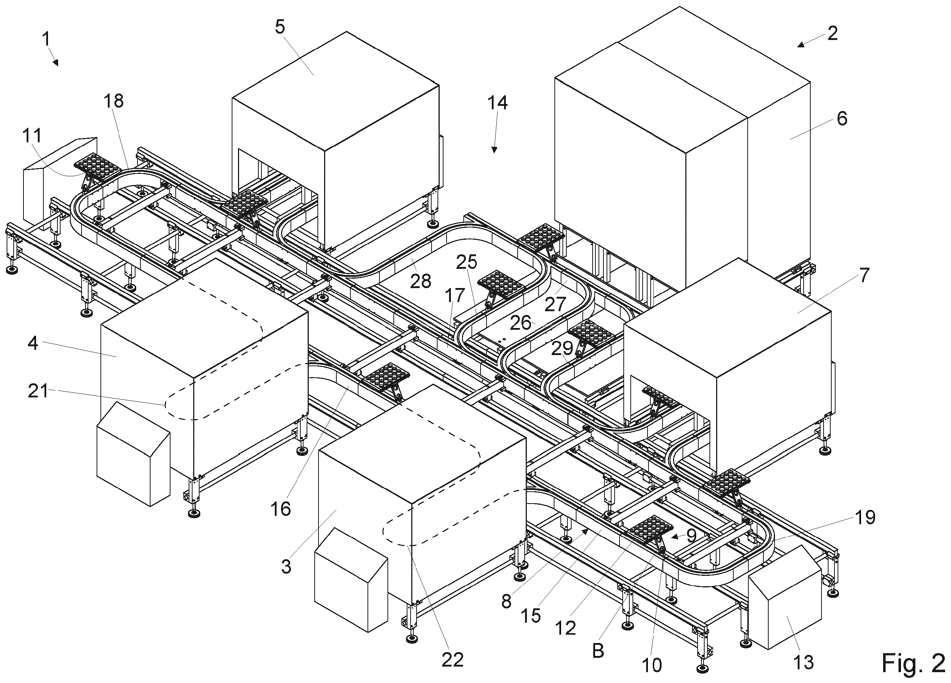

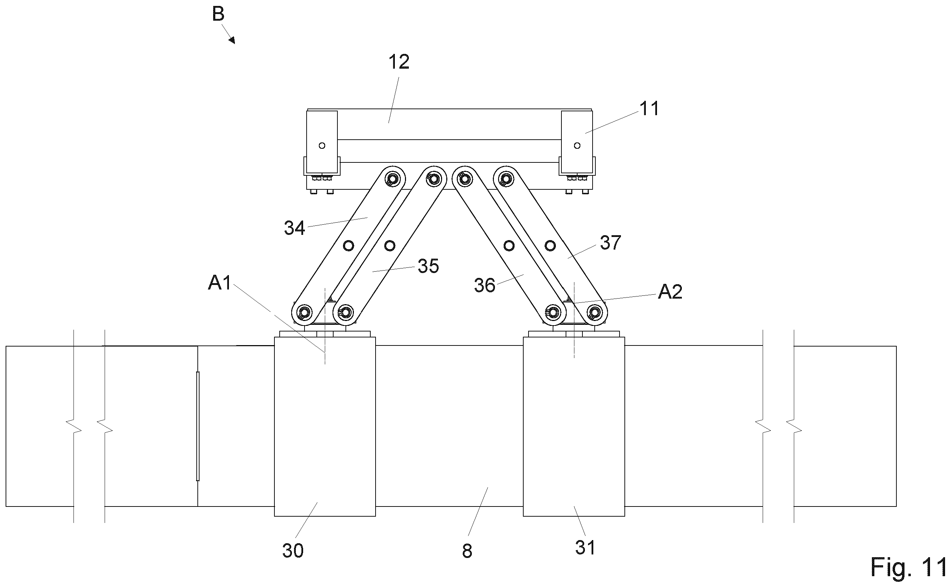

Eine Weiterbildung des Transportsystems 1 sieht gemäß Fig. 2 vor, dass das Schlittenelement 10 mit einer zusätzlichen Bewegungseinrichtung B versehen ist, die zur Ausführung einer komplexen Hilfsbewegung der Gießform 12 beitragen kann, insbesondere kann eine lotrechte Bewegungskomponente erzeugt werden. Die Bewegungseinrichtung B ist zwischen dem Schlittenelement 10 und der Aufnahmeeinrichtung 11 für die Gießform 12 angeordnet. Im vorliegenden Beispiel wirkt die zusätzliche Bewegungseinrichtung B mit jeweils zwei Schlittenelementen zusammen. Durch eine relative Bewegung der beiden Schlittenelemente voneinander weg oder aufeinander zu wird die lotrechte Bewegung umgesetzt, um die Aufnahmeeinrichtung zu heben oder abzusenken. Die Bewegungseinrichtung B in Fig. 2 entspricht derjenigen, die unten anhand von Fig. 11 detailliert erläutert ist.

Sehr zweckmäßig ist die zusätzliche Bewegungseinrichtung B, um beispielsweise in der Gießmaschine 3 eine Hilfsbewegung in lotrechter Richtung zu erzeugen, wobei mit lotrecht grundsätzlich die Schwerkraftrichtung gemeint ist (Z-Achse). Die Gießform 12 kann dadurch in Richtung einer Gießdüse der Gießstation 3 angehoben werden und lässt sich während des Gießvorgangs kontrolliert wieder absenken.

Des Weiteren nützt die zusätzliche Bewegungseinrichtung B in der Schalenformungsstation 4. Die hier vorgesehene Schalenformungsstation 4 arbeitet mittels eines Stempels, der in schmelzflüssige Süßwarenmasse eingetaucht wird, um die Gestalt der Schale zu erzeugen. Das Stempeln ist im Prinzip ein Fließpressvorgang, der die Süßwarenmasse im Hohlraum zwischen Gießform und Stempel verteilt und so der Schale die gewünschte Form verleiht. Der vorgesehene Stempel ist stationär angeordnet. Die für das Fließpressen nötige Relativbewegung zwischen Stempel und Gießform wird nur durch eine lotrechte Bewegung der Gießform nach oben in Richtung des Stempels bewerkstelligt. Erfindungsgemäß kann die Prozessbewegung für den Fließpressvorgang alleine durch die zusätzliche Bewegungseinrichtung B erzeugt werden.

In der zweiten Gießstation 5 gemäß Fig. 2 kann die Gießform zur Dosierung einer Füllungsmasse ebenfalls kontrolliert angehoben und abgesenkt werden, falls gewünscht.

In der Ausformstation 7 wird die Gießform 12 auf den Kopf gewendet, d.h. die Oberseite der Gießform wird nach unten gedreht, damit die fertigen Süßwarenartikel herausfallen können. Die in den Figuren 1-4 dargestellte Ausformstation verfügt über eine separate Einrichtung zum Wenden der Gießform 180° (nicht dargestellt).

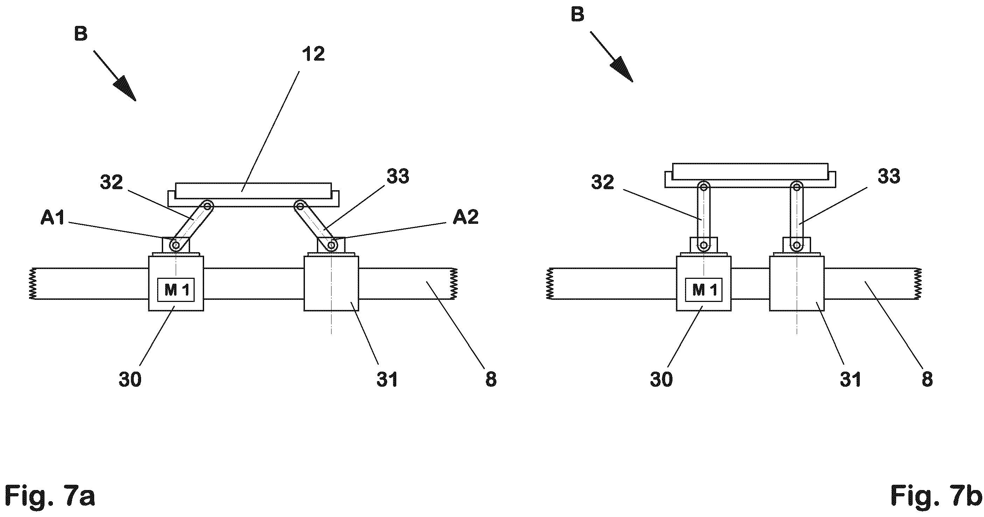

Details einiger Ausführungsbeispiele für Bewegungseinrichtungen, die eine lotrechte Bewegungskomponente zum Heben/Senken von Gießformen erzeugen können, sind weiter unten anhand der Figuren 7a-13b und 15a-16 erläutert.

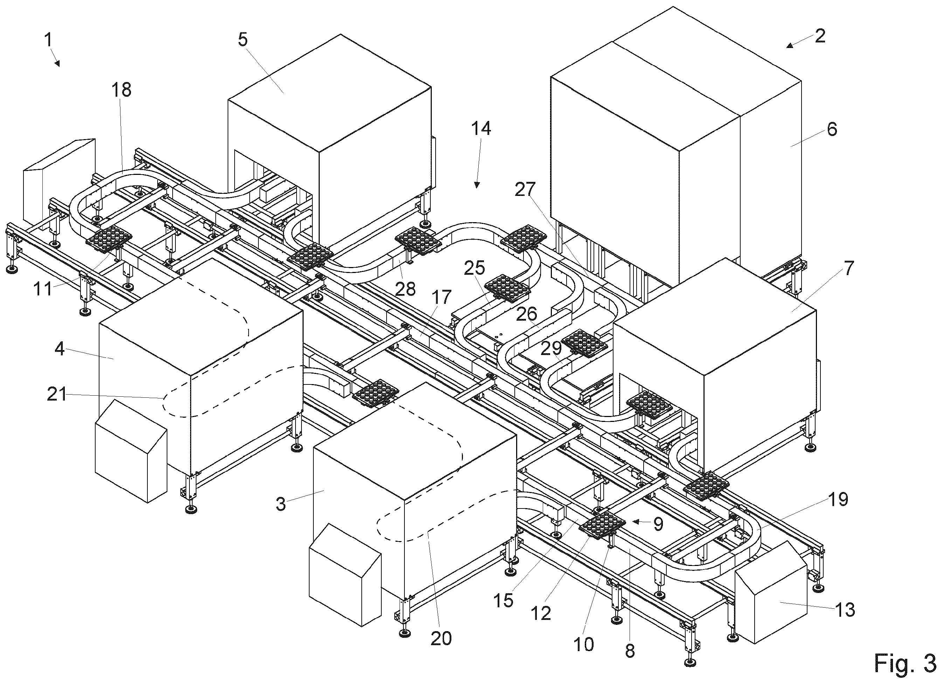

Eine alternative Ausführungsform eines erfindungsgemäßen Transportsystems ist in Fig. 3 dargestellt. Es hat ein Transportschienennetz 14, das identisch ist mit jenem Transportschienennetz 14 gemäß Fig. 2, verzichtet aber - ebenso wie Fig. 1 - auf eine zusätzliche Bewegungseinrichtung, die eine lotrechte Bewegungskomponente erzeugen könnte.

Die Transportschiene 8 und das Schlittenelement 10 sind gemäß Fig. 3 so hergerichtet, dass das Schlittenelement an eine Seitenfläche der Transportschiene ankoppelbar ist und an dieser entlang bewegt werden kann. Seitlich gehalten werden kann das Schlittenelement entweder durch eine Halteleiste oder Halterolle, etwa nach Art eines Schiebetürbeschlages oder alternativ durch magnetische Kraft.

Das Schlittenelement 10 gemäß Fig. 3 ist symmetrisch ausgebildet, d.h. es hat eine linke und eine rechte Seite. Wahlweise lässt sich seine linke Ankopplungsseite an eine links angeordnete Transportschiene ankoppeln oder umgekehrt seine rechte Ankopplungsseite an eine rechts angeordnete Transportschiene ankoppeln. Die Transportschienen sind aus geraden Stücken und Kurvenstücken zusammengesetzt. Im Transportschienennetz können Gabelungen gebildet werden, an denen ein Schlittenelement wahlweise geradeaus bewegt werden kann oder abzweigen kann.

Das beidseitig ankoppelbare Schlittenelement lässt sich von einer Ankoppelung mit seiner linken Seite an eine links vom Schlittenelement vorgesehene Transportschiene umschalten auf eine Ankopplung an eine rechts angeordnete Transportschiene.

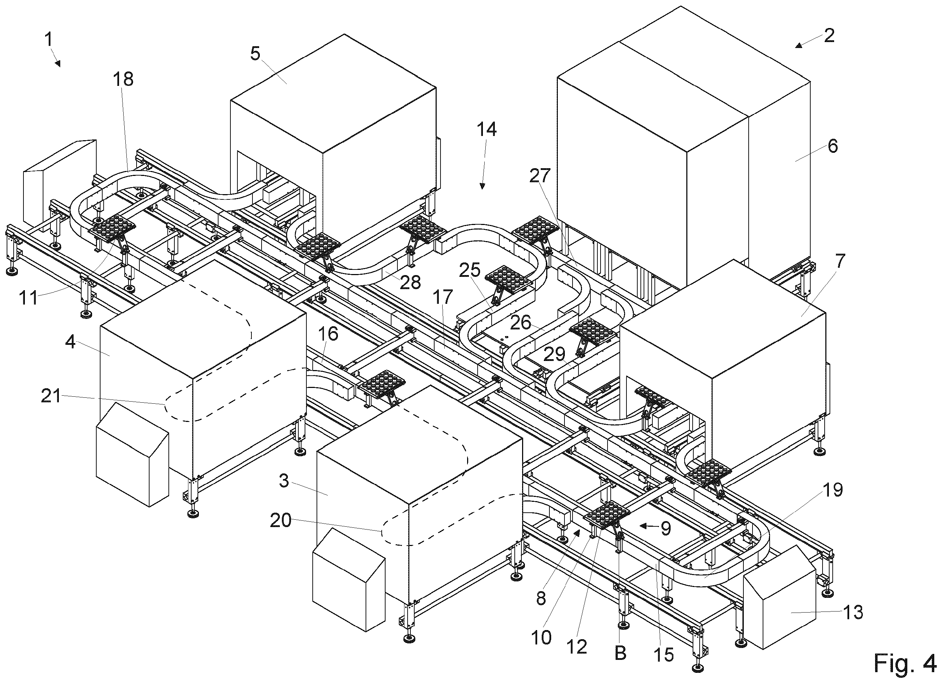

Ein weiteres Ausführungsbeispiel des Transportsystems der Fig. 4 basiert auf jenem von Fig. 3, insofern als es ein identisches Transportschienennetz 14 hat und aus den gleichen Stücken von Transportschienen zusammengesetzt ist. Wiederum ist ein Schlittenelement seitlich/beidseitig (links/rechts) ankoppelbar an die Transportschiene und daran entlang bewegbar. Im Unterschied zu Fig. 3 ist beim Ausführungsbeispiel der Fig. 4 eine zusätzliche Bewegungseinrichtung B vorgesehen, mit der insbesondere eine lotrechte Bewegungskomponente erzeugt werden kann. Die zusätzliche Bewegungseinrichtung B erfüllt dieselben Funktionen, wie jene in Fig. 2.

Fig. 5 zeigt schematisch eine Hilfsbewegung, welche das Schlittenelement 10 zusammen mit der Aufnahmeeinrichtung 11 durch eine Hin- und Herbewegung entlang der Transportschiene 8 erzeugen kann, nämlich ein Rütteln. Die Frequenz und Amplitude der Rüttelbewegung kann mittels der Steuereinrichtung 13 und der Antriebseinrichtung 9 für das Schlittenelement 10 definiert und justiert werden.

Des Weiteren ist in Fig. 5 eine Antriebseinrichtung 9 mit einem Elektromotor T1 vorgesehen.

Fig. 6 zeigt eine weitere Anwendung für eine Hilfsbewegung, die in Richtung der Transportschiene 8 verläuft, und zwar wird hier eine Gruppe aus beispielhaft vier Schlittenelementen 10a, 10b, 10c und 10d gebildet, die jeweils im Abstand b zueinander gruppiert werden. Die transportierten Gießformen 12 können dann als Gruppe gleichzeitig einem Produktionsschritt zugeführt werden. Wenn die Überführung der Schlittenelemente hinein in die Gruppe in beschleunigter Weise geschieht, d. h. mit einer schnelleren Bewegung als der Transportgeschwindigkeit vor der Gruppenbildung, dann kann Zeit gewonnen werden, die dem gleichzeitig durchzuführenden Produktionsschritt zu Gute kommen kann. Diese Art der Gruppenbildung ersetzt eine eigens dafür bekannte Vorrichtung, wie aus DE 10 2005 018 416 A1 bekannt.

Eine zusätzliche Bewegungseinrichtung B für die Aufnahmeeinrichtung 11, auf der eine Gießform 12 transportierbar ist, ist in den Figuren 7a und 7b dargestellt. Hier sind zwei Schlittenelemente 30 und 31 an einer Transportschiene 8 vorgesehen. An dem Schlittenelement 30 ist ein Gelenkstab 32 an einem Ende drehbar gelagert. Das andere Ende des Gelenkstabs 32 ist mit der Aufnahmeeinrichtung drehbar verbunden. Ebenso ist ein Gelenkstab 33 vorgesehen, der in gleicher Weise drehbar mit dem Schlittenelement 31 und der Aufnahmeeinrichtung verbunden ist. Das Ganze bildet eine Transporteinheit, die insgesamt als Einheit innerhalb des Transportschienennetzes bewegt wird. Ausgehend von Fig. 7a bewirkt eine Verkürzung des Abstands zwischen den Schlittenelementen 30 und 31 eine lotrechte Bewegung der Aufnahmeeinrichtung, sie wird angehoben, maximal bis auf das Niveau, das in Fig. 7b angedeutet ist. Gleichsam kann die Aufnahmeeinrichtung ausgehend von Fig. 7a durch eine Vergrößerung des Abstandes zwischen den Schlittenelementen 30 und 31 auf ein niedrigeres Niveau abgesenkt werden. Um die Transporteinheit entlang einer Kurve, d. **h.** einer gekrümmten Transportschiene bewegen zu können, sind Drehachsen A1 und A2 vorgesehen.

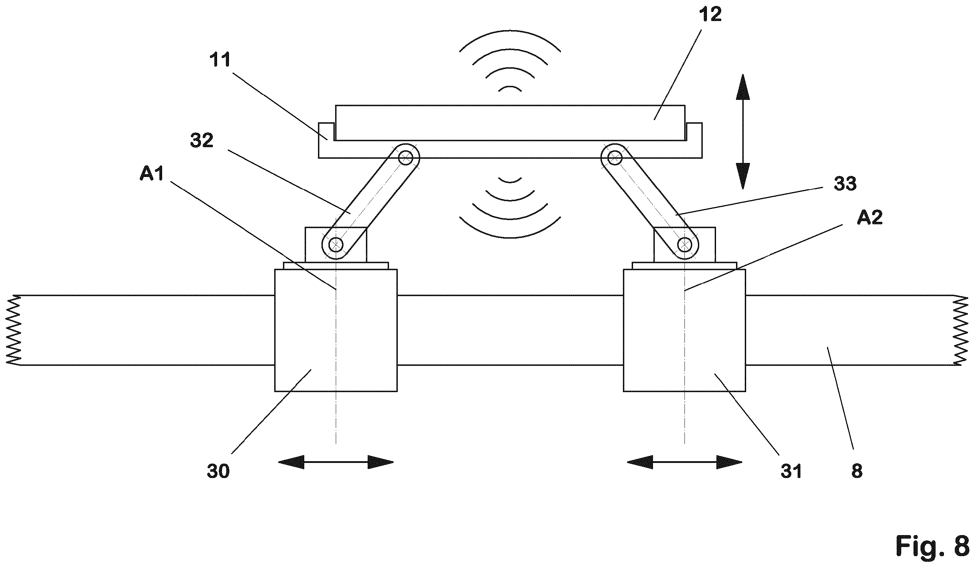

Fig. 8 vermittelt, wie mit dem Ausführungsbeispiel gemäß Fig. 7a/7b eine Rüttelbewegung in lotrechter Richtung bewirkt werden kann, nämlich durch hin und her gehende Bewegung der beiden Schlittenelemente 30 und 31 mit gewünschter Frequenz und Amplitude.

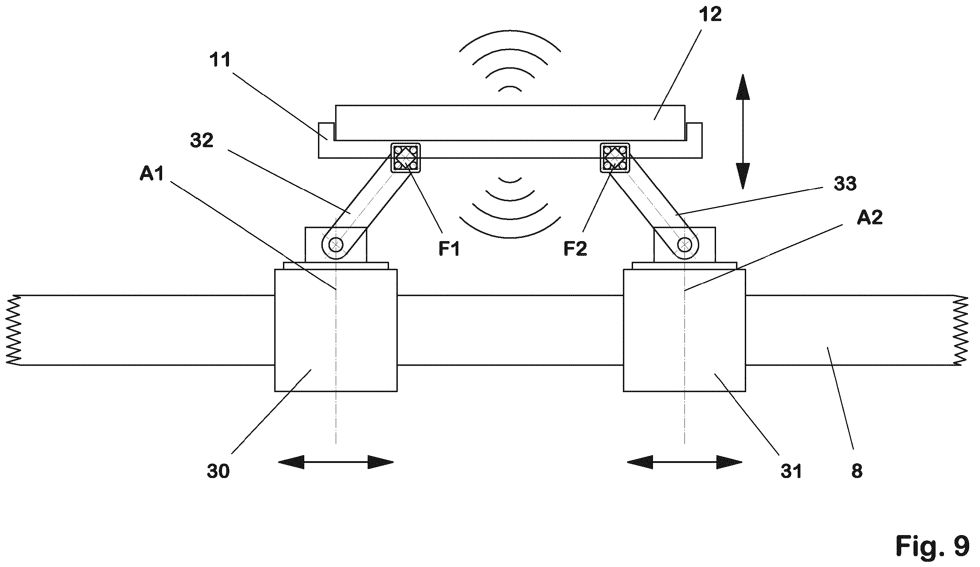

Fig. 9 bildet das Ausführungsbeispiel gemäß Fig. 8 weiter, indem jeweils dort, wo die Gelenkstäbe drehbar mit der Aufnahmeeinrichtung verbunden sind, je ein Federelement F1 und F2, beispielsweise ein Gummifederelement vorgesehen ist. Die Gummifederelemente können Schwingungen dämpfen. Sie verbessern die Langlebigkeit der Lager und bewahren die Schlittenelement davor, starke Stöße aufnehmen zu müssen.

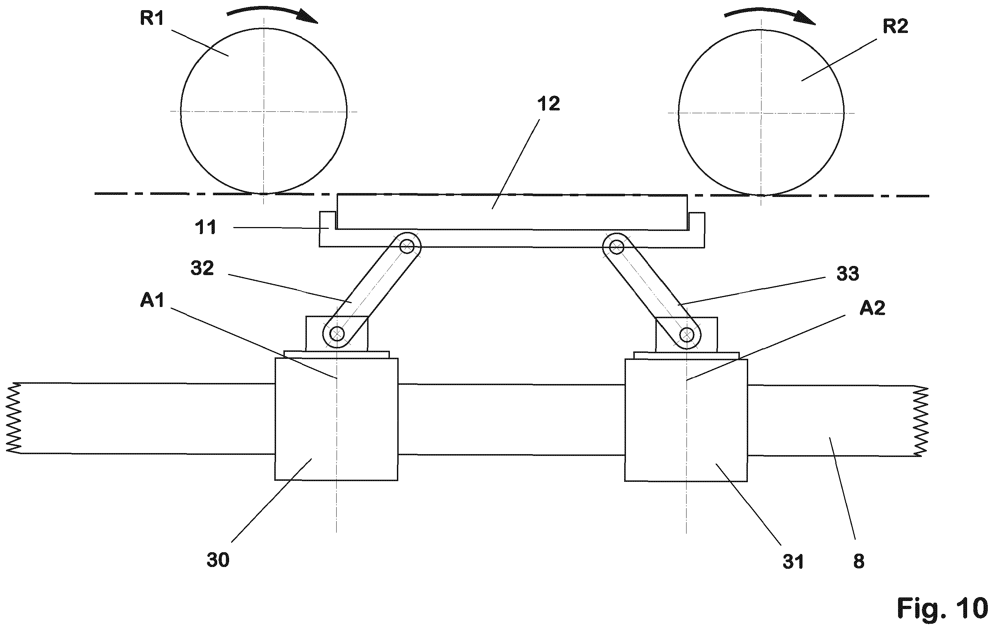

Fig. 10 stellt eine andere Anwendung des Ausführungsbeispiels nach Fig. 7a/7b dar und zwar sind hier zwei rotierende Walzen dargestellt, sogenannte Ableckwalzen R1 und R2, die dazu dienen, Schmutz von der Oberfläche einer Gießform 12 abzuheben und zu entfernen, insbesondere Schmutz in Form von Süßwarenmasse. Mit der zusätzlichen Bewegungseinrichtung B kann die Gießform 12 exakt in Richtung der Ableckwalzen R1/R2 angehoben werden. Im Einsatz liegen die Ableckwalzen mit ihrem Eigengewicht auf der Gießform. Eine besondere Anwendung der Ableckwalzen besteht darin, den Schalenrand einer zuvor geformten Süßwarenschale exakt auszubilden. In dem Fall werden die Ableckwalze und die Süßwarenschale soweit aufeinander zu bewegt, dass ein definierter Spalt bleibt.

Eine weitere Ausführungsform zeigt Fig. 11, bei der wiederum eine zusätzliche Bewegungseinrichtung B zwei Schlittenelemente 30 und 31 aufweist, die mit der Aufnahmeeinrichtung 11 für die Gießform 12 zusammenwirkt. Auf diese Weise wird die Gießform getragen und es kann eine lotrechte Hilfsbewegung der Aufnahmeeinrichtung 11 erzeugt werden. Bei dieser Ausführungsform sind aber zwei Gelenkstäbe 34 und 35 als Gelenkstabpaar angeordnet. Beide Gelenkstäbe sind einem Schlittenelement 30 zugeordnet und drehbar daran gelagert. Dabei befinden sich die Drehachsen der beiden Gelenkstäbe auf gleichem Niveau. Am anderen Ende ist jeder Gelenkstab 34 und 35 drehbar mit der Aufnahmeeinrichtung 11 verbunden und auch hier sind die Drehachsen der Gelenkstäbe auf gleichem Niveau vorgesehen. Insgesamt bildet das Schlittenelement zusammen mit den beiden Gelenkstäben und mit der Aufnahmeeinrichtung ein Parallelogramm. Die Ausführung als Parallelogramm gewährleistet, dass die Aufnahmeeinrichtung beim Heben und Senken immer waagerecht bleibt. Das zweite Schlittenelement 31 und die Aufnahmeeinrichtung wirkt in gleicher Weise mit einem zweiten Gelenkstabpaar bestehend aus den Gelenkstäben 36 und 37 zusammen, die spiegelbildlich zu dem ersten Gelenkstabpaar angeordnet sind und ebenfalls die Aufnahmeeinrichtung waagerecht halten. An jedem Schlittenelement ist eine lotrechte Drehachse A1 beziehungsweise A2 vorgesehen, um einer Kurve einer Transportschiene folgen zu können.

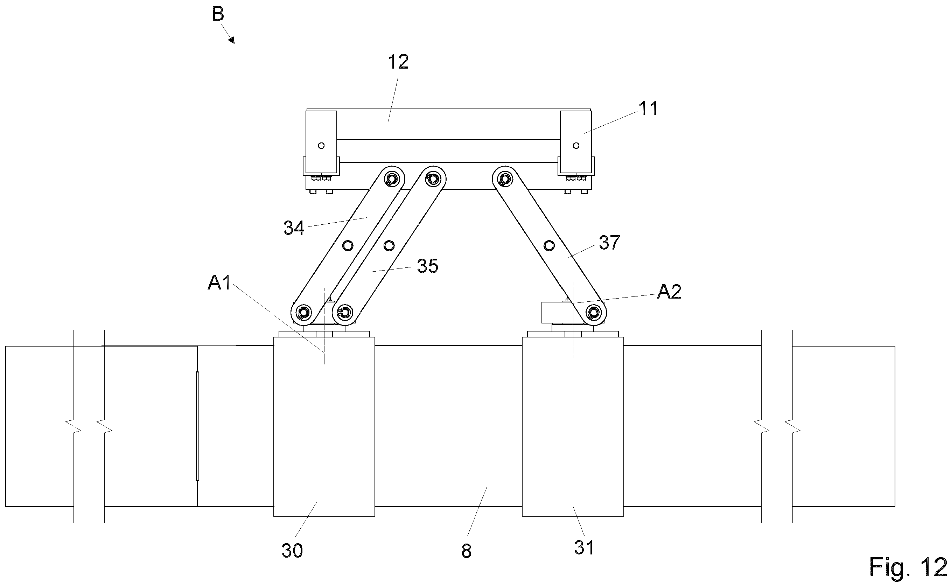

Die Ausführungsform der Fig. 12 basiert auf Fig. 11 und unterscheidet sich nur dadurch, dass ein Schlittenelement 30 ein Gelenkstabpaar aufweist, das die beiden Gelenkstäbe 34 und 35 umfasst, während das zweite Schlittenelement 31 auf ein Parallelogramm verzichtet und nur über einen einzelnen Gelenkstab 35 mit der Aufnahmeeinrichtung 11 verbunden ist. Die waagerechte Ausrichtung der Aufnahmeeinrichtung wird hier also nur durch ein Parallelogramm realisiert, das am Schlittenelement 30 fußt.

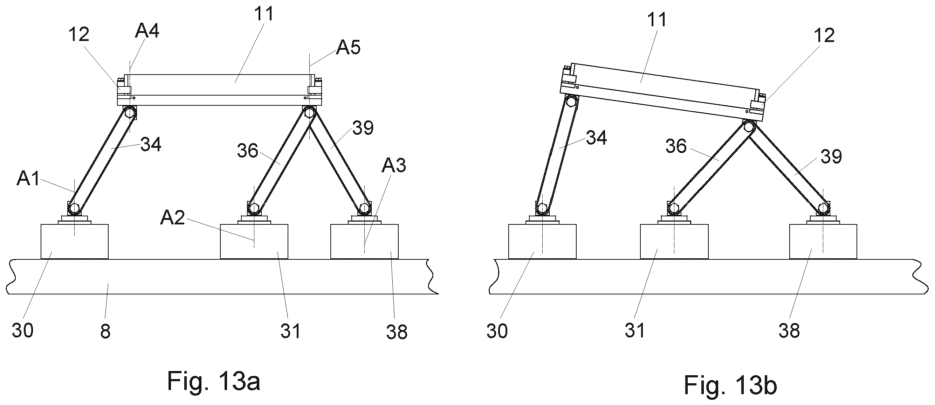

Ein weiteres Ausführungsbeispiel mit einer zusätzlichen Bewegungseinrichtung für die Aufnahmeeinrichtung 11 zeigen die Figuren 13a und 13b. Dieses Ausführungsbeispiel nutzt drei Schlittenelemente 30, 31 und 38, um die Aufnahmeeinrichtung 11 zu tragen und zu bewegen. An jedem der Schlittenelemente ist je ein Gelenkstab 34, 36 und 39 drehbar gelagert. An der Aufnahmeeinrichtung 11 sind jedoch nur zwei Drehachsen vorgesehen. An der ersten Drehachse ist nur der Gelenkstab 34 angeschlossen, der zum Schlittenelement 30 verbindet. An der zweiten Drehachse sind die beiden Gelenkstäbe 36 und 39 angeschlossen, von denen der Gelenkstab 36 am Schlittenelement 31 drehgelagert ist und Gelenkstab 39 am Schlittenelement 38 drehgelagert ist. An jedem Schlittenelement ist eine lotrechte Drehachse A1, A2 beziehungsweise A3 vorgesehen, um auch hier einer Kurve einer Transportschiene folgen zu können sowie lotrechte Drehachse A4 und A5 an der Aufnahmeeinrichtung.

Mit der Anordnung gemäß den Figuren 13a/13b kann die Aufnahmeeinrichtung 11 geneigt werden. Gemäß Fig. 13a ist die Aufnahmeeinrichtung 11 parallel zur Transportschiene 8 ausgerichtet (waagerecht). Ausgehend von Fig. 13a zeigt Fig. 13b eine Vergrößerung des Abstands zwischen den Schlittenelementen 36 und 38, die in einer Neigung der Aufnahmeeinrichtung 11 resultiert. Eine Neigung der Aufnahmeeinrichtung ist für das neue Transportsystem deswegen zweckmäßig, weil eine Gießform 12 individuell und auf hohe Geschwindigkeit beschleunigt werden kann und ebenso stark verzögert/abgebremst werden kann. Es sind höhere Geschwindigkeiten realisierbar, als von konventionellen Süßwarenmaschinen mit Förderkette bekannt. In einer Gießform 12, die schmelzflüssige Süßwarenmasse enthält, kann die Süßwarenmasse beim Beschleunigen und Verzögern hin und her schwappen und es besteht das Risiko, dass Süßwarenmasse über den Rand der Gießform 12 hinaus schwappen kann. Zweckmäßig ist es deswegen, dem entgegenzuwirken, jedoch nicht etwa durch einen Verschluss der Gießform, sondern dadurch, dass die Gießform um eine horizontale Achse geneigt werden kann, die rechtwinklig (quer) zur Transportschiene 8 angeordnet ist.

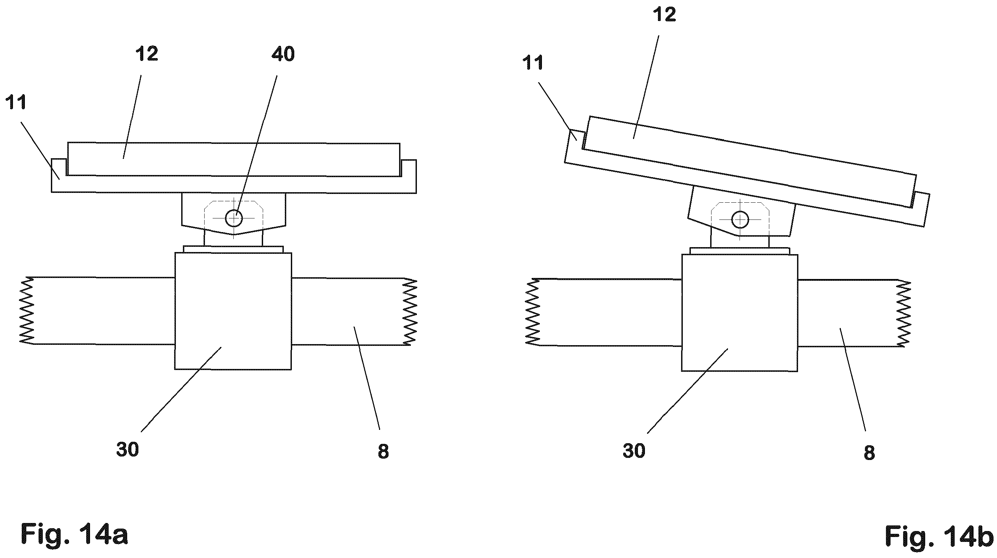

Die Figuren 14a und 14b zeigen ein alternatives Ausführungsbeispiel mit neigbaren Aufnahmeeinrichtung 11, die ebenfalls um eine horizontale Achse 40 geneigt werden kann, welche rechtwinklig zur Transportschiene 8 liegt. Dieses Ausführungsbeispiel sieht jedoch nur ein Schlittenelement 30 vor. Bei einer Beschleunigung/Verzögerung der Aufnahmeeinrichtung 11 wird die Neigung beispielsweise dadurch bewirkt, dass unterhalb der Achse 40 eine träge Masse angebracht ist, die bei einer Beschleunigung in Richtung der Transportschiene bestrebt ist, in ihrem Ruhezustand zu verharren und eine Kippbewegung erzeugt. Eine entgegengesetzte Kippbewegung tritt ein, wenn die Aufnahmeeinrichtung verzögert wird. Vorzugsweise ist auch noch ein Dämpfungselement vorgesehen, um einem Hin- und Herschwingen entgegenzuwirken.

Eine Neigung um eine andere horizontale Achse kann ebenfalls zweckmäßig sein, nämlich wenn diese parallel zur Transportschiene 8 angeordnet ist (nicht dargestellt). So kann einem Hinausschwappen von Süßwarenmasse entgegengewirkt werden, wenn Fliehkräfte einwirken, beispielsweise bei Bewegung der Gießform 12 auf einer Kurve. Dies kann nach demselben Prinzip, wie oben, ebenfalls mittels einer trägen Masse unterhalb der horizontalen Achse realisiert werden.

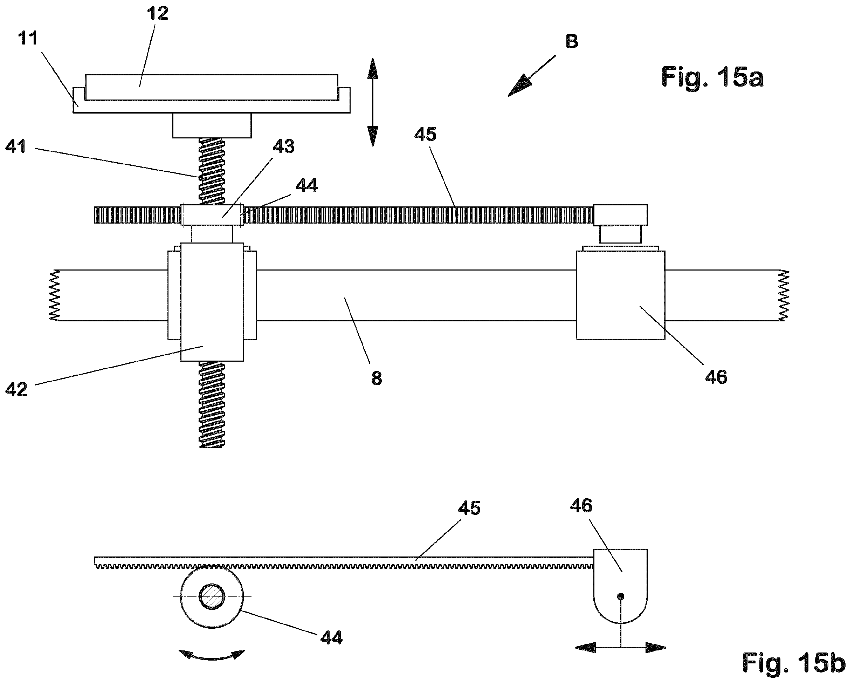

Die Figuren 15a und 15b zeigen eine weitere Ausführungsform mit einer zusätzlichen Bewegungseinrichtung B, mit der die Aufnahmeeinrichtung 11 für die Gießform lotrecht auf und ab bewegbar ist. Dabei kommt eine Spindel 41 mit einem Bewegungsgewinde zum Einsatz. Die Spindel ist lotrecht an einem Schlittenelement 42 angeordnet, dass auf einer Transportschiene 8 sitzt. An dem oberen Ende der Spindel ist gemäß Fig. 15a die Aufnahmeeinrichtung 11 für die Gießform 12 angeordnet. Es ist ein Muttergewindeelement 43 für das Bewegungsgewinde der Spindel 41 vorgesehen. Das Muttergewindeelement 43 ist dem Schlittenelement 42 zugeordnet und relativ zu diesem drehbar gelagert. Wenn das Muttergewindeelement 43 links oder rechts herum gedreht wird, bewegt sich die Spindel auf oder ab. Um das Muttergewindeelement 43 in Drehung zu versetzen ist es mit einer Außenverzahnung 44 versehen, die zusammenwirkt mit einer Zahnstange 45. Fig. 15b zeigt eine Draufsicht auf das Muttergewindeelement 43 mit der Außenverzahnung 44 sowie auf die Zahnstange 45. Die Zahnstange 45 ist mit einem Ende starr an einem zweiten entlang der Transportschiene beweglichen Schlittenelement 46 angeschlossen. Durch eine Bewegung des zweiten Schlittenelements 46 relativ zum ersten Schlittenelement 42 entlang der Transportschiene 8 lässt sich die Spindel und damit die Aufnahmeeinrichtung 11 auf- oder abwärts bewegen, wobei hierfür parallel zur Spindel zwei Linearführungen vorgesehen sind (nicht dargestellt), die ein Mitdrehen der Aufnahmeeinrichtung verhindern.

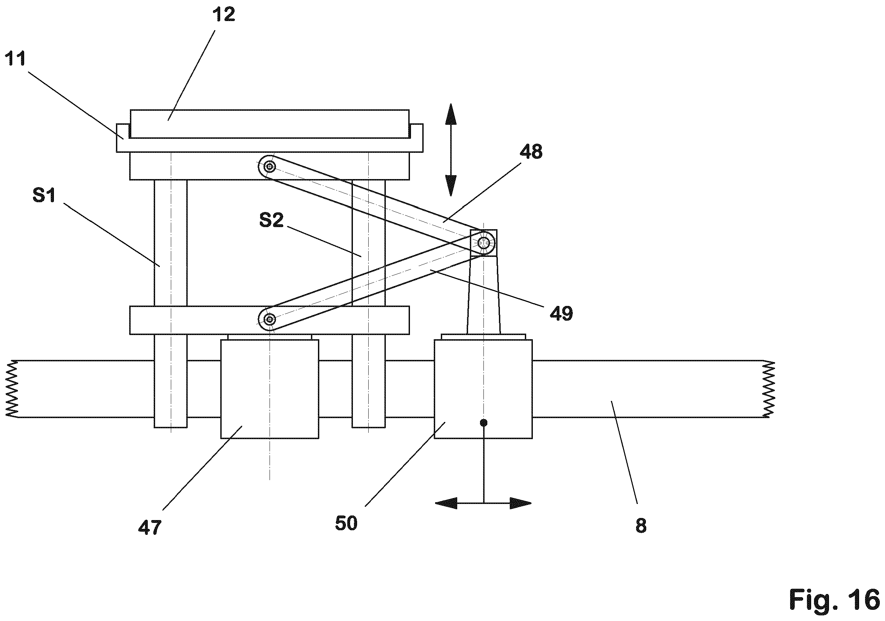

Fig. 16 stellt eine Ausführungsform mit einer zusätzlichen Bewegungseinrichtung B dar, die wiederum mit zwei Schlittenelementen operiert, die an eine Transportschiene 8 gekoppelt sind. Ein erstes Schlittenelement 47 trägt eine Aufnahmeeinrichtung 11, die an zwei lotrecht angeordneten Führungsschienen S1 und S2 angeordnet ist, an der sie auf und ab gleiten kann. Der Antrieb für die Auf- und Abbewegung wird mit Hilfe zweier scherenartig angeordneter Gelenkstäben realisiert. Davon ist ein Gelenkstab 48 mit einem Ende an der Aufnahmeeinrichtung 11 drehbar angeschlossen und der zweite Gelenkstab 49 ist mit einem Ende an dem Schlittenelement 47 drehbar verbunden. Die beiden anderen Enden der Gelenkstäbe 48 und 49 sind zusammengefasst und in einer gemeinsamen Drehachse verbunden mit dem zweiten Schlittenelement 50. Durch eine Bewegung der beiden Schlittenelemente 47 und 50 aufeinander zu wird die Aufnahmeeinrichtung 11 angehoben und mit einer Bewegung der beiden Schlittenelemente voneinander weg wird die Aufnahmeeinrichtung abgesenkt.

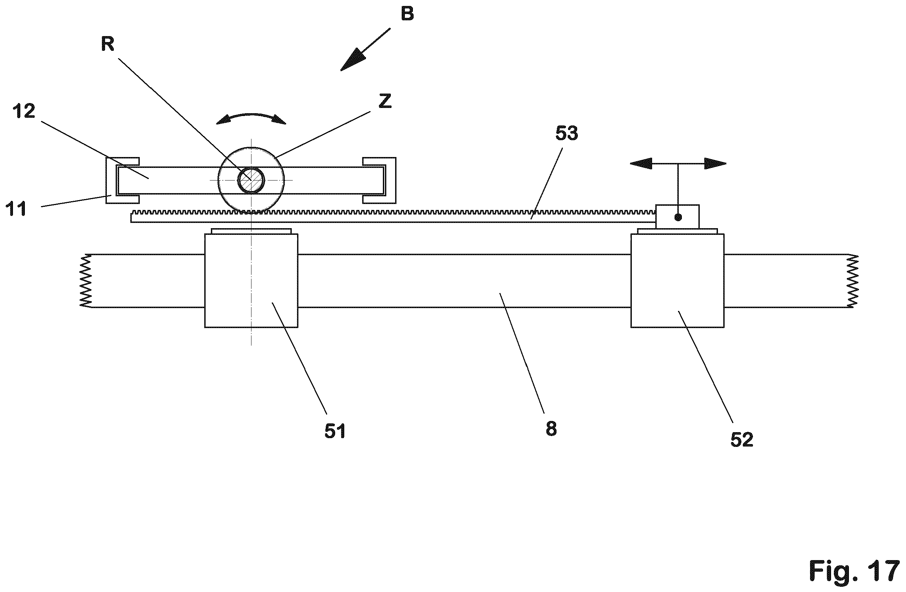

Fig. 17 stellt eine Ausführungsform mit einer zusätzlichen Bewegungseinrichtung B dar, die eine Rotation der Gießform 12 bewirken soll. Wiederum sind zwei Schlittenelemente 51 und 52 vorgesehen. Die Aufnahmeeinrichtung 11 ist an dem ersten Schlittenelement 51 so gelagert, dass sie um eine Rotationsachse R rotierbar ist, wobei die Rotationsachse horizontal und zur Transportschiene 8 rechtwinklig liegt. In der Rotationsachse ist ein Zahnradelement Z vorgesehen, das mit einer Zahnstange 53 zusammenwirkt. Die Zahnstange ist mit einem Ende starr an einem zweiten Schlittenelement 52 angeschlossen und kann von diesem entlang der Transportschiene 8 bewegt werden, um das Zahnradelement Z anzutreiben und die Rotationsachse vor oder rückwärts in Rotation zu versetzen. Ein Anwendungsbeispiel ist die Ausformstation, in der eine Gießform um 180° rotiert wird, um fertige Süßwarenartikel aus der Gießform herausfallen zu lassen.

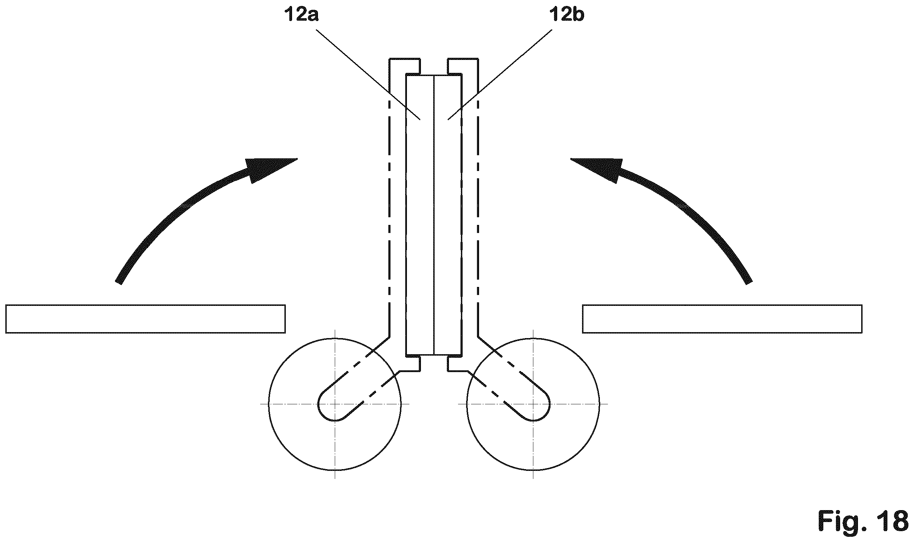

Dasselbe Prinzip zur Rotation einer Gießform wird gemäß Fig. 18 dafür eingesetzt, um eine aus zwei Gießformteilen 12a und 12b bestehende Gießform zusammenzusetzen. Dazu wird jedes Gießformteil in entgegengesetzter Drehrichtung um jeweils 90° gedreht und beide Oberseiten werden gegeneinander gefügt. In solche geteilten Gießformen werden vorzugsweise Hohlkörper aus Schokolade hergestellt.

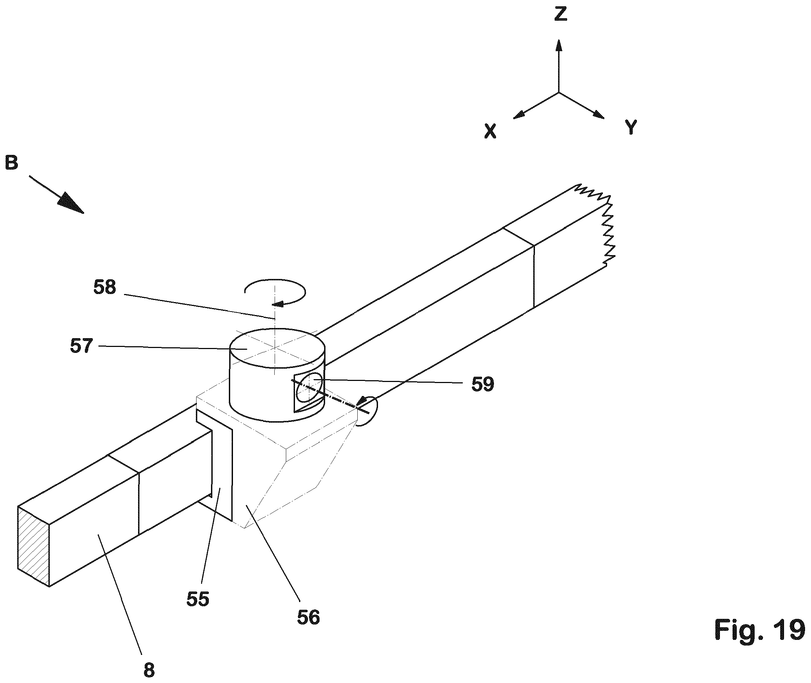

Fig. 19 zeigt eine Ausführungsform mit einer Transportschiene 8 und einem U-förmigen Schlittenelement 55. An dem Schlittenelement ist ein Adapter 56 dargestellt. An dem Adapter ist wiederum eine zusätzliche Bewegungseinrichtung B vorgesehen. Die Bewegungseinrichtung ist als ein Drehgelenk 57 ausgebildet. Das Drehgelenk eignet sich als Aufnahmeeinrichtung für eine Gießform. Wie in Fig. 19 angedeutet, ist das Drehgelenk um die eigene lotrechte Drehachse 58 (Z-Achse) drehbar. Es weist eine Bohrung 59 radial zur eigenen Drehachse 58 auf. In die Bohrung 59 ist eine Welle einführbar und in der Bohrung sicherbar. An der Welle ist seitlich die Gießform anbringbar. So an der Welle befestigt kann die Gießform um die Drehachse 58 des Drehgelenks rotieren. Die Gießform kann außerdem um die Achse der Bohrung 59 rotieren. Das Drehgelenk 57 kann Anschläge aufweisen, um die Drehung um die Drehachse 58 beziehungsweise um die Achse der Bohrung 59 einzuschränken. Der Antrieb kann, wie in Fig. 17 über ein zweites Schlittenelement erfolgen, an dem eine Zahnstange befestigt ist und mit einem an der Drehachse vorgesehenen Zahnrad, das mit der Zahnstange zusammenwirkt.

Alternativ kann stationär in einer Produktionsstation ein pneumatischer oder elektrischer Antrieb vorgesehen sein, der über eine Kupplungseinrichtung temporär mit der jeweiligen Drehachse 58 beziehungsweise 59 verbindbar ist, und um die erforderliche Hilfsbewegung zu erzeugen.

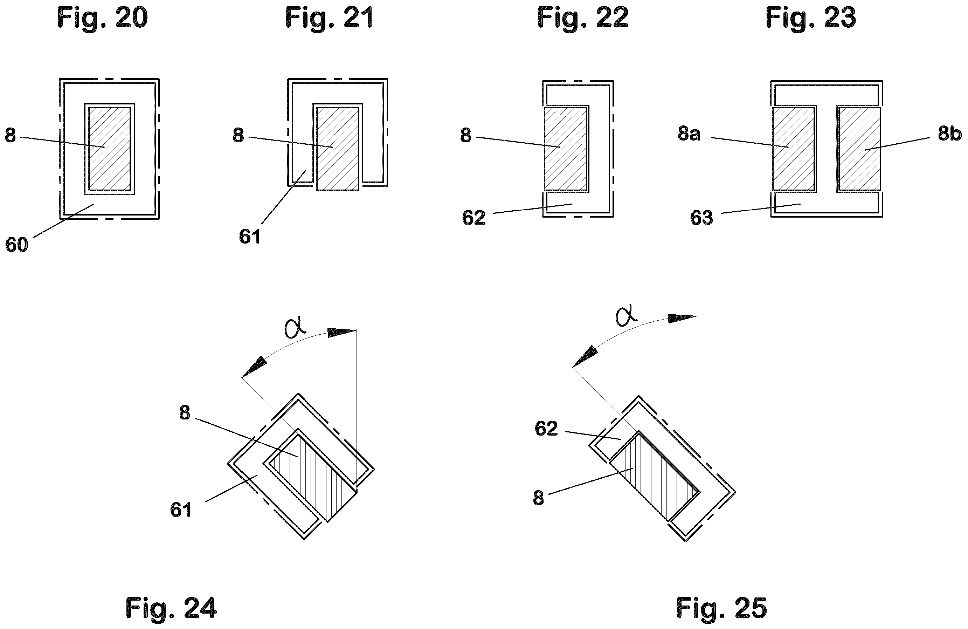

Die Figuren 20 bis 25 stellen verschiedene Querschnitte und räumliche Anordnungen einer Transportschiene mit rechteckigem Querschnitt dar sowie den Querschnitt des Schlittenelements.

In den Figuren 20 bis 23 ist der Querschnitt der rechteckigen Transportschiene 8 hochkant angeordnet. Fig. 20 zeigt ein Schlittenelement 60 mit ringförmig geschlossenem Querschnitt. Die Transportschiene 8 ist hier von dem Schlittenelement 60 ganz umschlossen. Die Figuren 21 und 22 zeigen Schlittenelemente mit U-förmigem Querschnitt. Das Schlittenelement 61 in Fig. 21 ist mit nach unten offenem Querschnitt auf der Transportschiene 8 angeordnet und das Schlittenelement 62 in Fig. 22 weist einen seitlich offenen Querschnitt auf, mit dem es an der Transportschiene 8 angeordnet ist. Fig. 23 stellt zwei Transportschienen 8a und 8b nebeneinander dar sowie ein Schlittenelement 63, das einen beidseitig offenen doppel-T-förmigen Querschnitt hat. In die offenen Querschnitte des doppel-T-förmigen Schlittenelements 63 passt je eine der beiden Transportschienen 8a beziehungsweise 8b hinein.

Die Figuren 24 und 25 zeigen jeweils eine Transportschiene 8 mit einem Querschnitt, der um einen Winkel α gegenüber dem Lot geneigt ist. In Fig. 24 ist auf der Transportschiene 8 das identische U-förmige Schlittenelement 61, wie in Fig. 21 angeordnet. In Fig. 25 ist das identische U-förmige Schlittenelement 62 gemäß Fig. 22 angeordnet. Die Transportschiene 8 um einen Winkel α gegenüber dem Lot geneigt anzuordnen kann nützlich sein, wenn für eine Anordnung hochkant der Platz nicht ausreicht. Durch eine Neigung wird etwas weniger Höhe für die Transportschiene 8 benötigt.

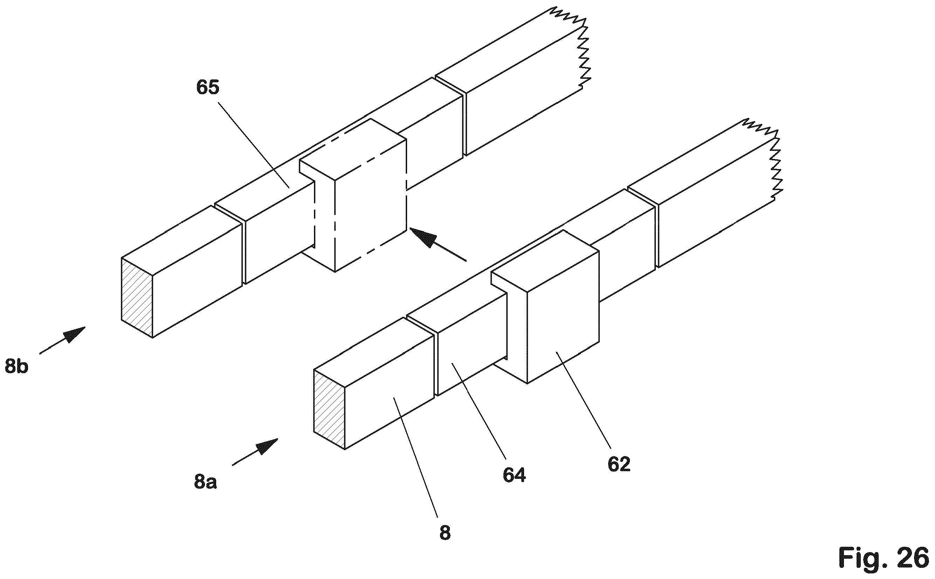

In Fig. 26 sind zwei Stücke Transportschiene 8a und 8b dargestellt, die in einem Abstand nebeneinander angeordnet sind. Die Transportschienen 8a weist eine Lücke auf, in der ein Schienenzwischenstück 64 vorgesehen ist. Gleichsam hat die Transportschiene 8b eine Lücke, welche von einem Schienenzwischenstück 65 geschlossen ist. Die Transportschienen sind über die Schienenzwischenstücke befahrbar. Außerdem sind die Schienenzwischenstücke 64 und 65 seitlich verschiebbar. Das Schienenzwischenstück 64 lässt sich bis in die Lücke der anderen Transportschiene 8b hineinbewegen, wobei das dortige Schienenzwischenstück 65 dann zurückweicht. Umgekehrt gilt das Gleiche. Das Schienenzwischenstück 65 lässt sich bis in die Lücke der Transportschiene 8a bewegen und das dortige Schienenzwischenstück 64 weicht dann zurück. Auf diese Weise ist eine Weiche gebildet. Wenn ein Schlittenelement 62 auf Transportschiene 8a herankommt und das Schienenzwischenstück 64 erreicht hat, dann kann dieses zusammen mit dem Schlittenelement 62 seitlich verschoben werden bis in die Lücke der Transportschiene 8b. So kann das Schlittenelement 62 auf die Transportschiene 8b wechseln. Die Anordnung dient somit als Weiche.

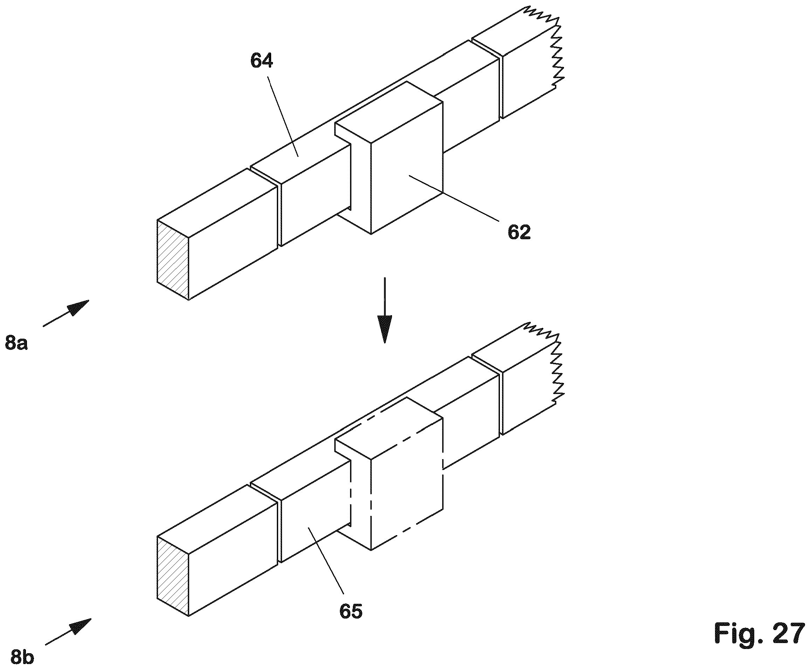

Fig. 27 stellt das gleiche Prinzip einer Weiche dar, wie Fig. 26, wobei aber die Transportschienen 8a und 8b übereinander angeordnet sind und nicht nebeneinander. Ansonsten ist die Funktionalität, wie in Fig. 26. Beide Transportschienen haben Lücken, in denen sich Schienenzwischenstücke 64 beziehungsweise 65 befinden, die sich auf und ab bewegen lassen, jeweils bis hinein in die Lücke der anderen Transportschiene.

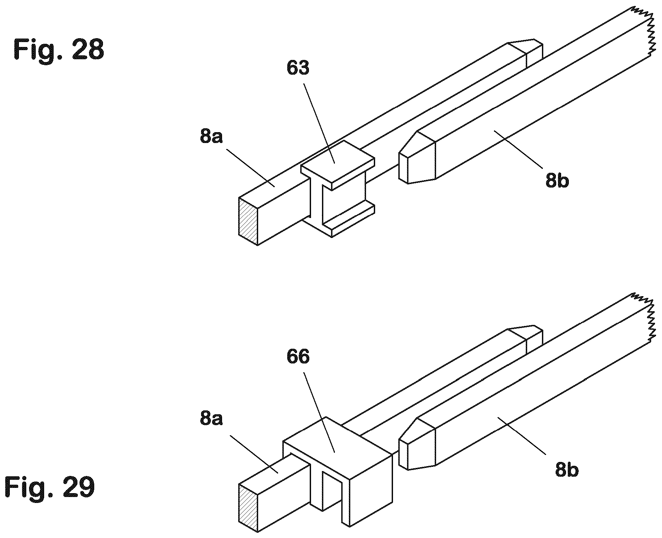

Die Figuren 28 und 29 zeigen zwei Ausführungsbeispiele von Schlittenelementen, welche jeweils von einer Transportschiene 8a auf eine Transportschiene 8b wechseln können. In Fig. 28 ist ein Ende der Transportschiene 8a gezeigt sowie ein Ende der Transportschiene 8b. Die Enden beider Transportschienen überlappen sich in einem gewissen Bereich. Das in Fig. 28 gezeigte Schlittenelement 63 ist doppel-T-förmig ausgebildet und entspricht jenem in Fig. 23. Wenn es sich auf der Transportschiene 8a in Richtung des Überlappungsbereichs bewegt und diesen passiert, dann bewegt es sich hinter der Überlappung auf der Transportschiene 8b weiter.

Das Schlittenelement 66 in Fig. 29 hat einen Querschnitt mit zwei zur gleichen Seite (nach unten) gerichteten Öffnungen. Wenn es sich auf der Transportschiene 8a in Richtung des Überlappungsbereichs bewegt und diesen passiert, dann bewegt es sich ebenfalls hinter der Überlappung auf der anderen Transportschiene 8b weiter.

Fig. 30 zeigt eine Transportschiene 8, die modular aufgebaut ist. Es sind mehrere Schienenstücke, wie das Schienenstück 8c in Reihe hintereinander gesetzt. Die gestrichelt dargestellten Bereiche, wie der Bereich 67 des Schienenstücks 8c, sind mit mehreren Spulenelementen G1, G2, G3, etc. versehen. Die Spulenelemente sind entlang des Schienenstücks vorgesehen und bilden zusammen einen sogenannten Langstator. Der Langstator bildet den Primärteil eines Linearmotors. Der Primärteil mit den Spulenelemente G1, G2, G3 wirkt mit mehreren Dauermagneten D1, D2, D3 etc. zusammen, die als Sekundärteil des Linearmotors an dem Schlittenelement 61 angeordnet sind. Des Weiteren ist an jedem Schienenstück ein Positionssensor S vorgesehen. Der Positionssensor erfasst stets exakt an welcher Stelle sich die Magnetfelder der Dauermagneten des Schlittenelements befinden.

Nachfolgend sind Layout-Beispiele für Transportschienennetze angegeben, die dazu dienen können effektiv die Produktionsstationen einer Süßwarenmaschine zweckmäßig anzuordnen und effektiv zu nutzen.

Beispielsweise bei einem Reihen-Layout gemäß Fig. 31 verläuft die Transportschiene 8 linienförmig und hat einen Anfang und ein Ende. Die Produktionsstationen, wie P1, P2, P3, etc. sind entlang der Transportschiene in einer Reihe angeordnet.

Bei einem Ring-Layout gemäß Fig. 32 ist eine Transportschiene 8 umlaufend vorgesehen und Produktionsstationen, wie P1, P2, P3, etc. sind aufeinanderfolgend entlang der Transportschiene angeordnet.

Bei einem Bus-Layout, wie in Fig. 33, ist eine Hauptschiene 68 vorgesehen und seitlich zur Hauptschiene 68 sind Produktionsstationen, wie P1, P2 und P3 etc. angeordnet; hierfür sind Abzweige 69, 70, 71 von der Hauptschiene zur jeweiligen Produktionsstation vorgesehen, damit eine Gießform zur Produktionsstation abzweigen oder diese passieren kann.

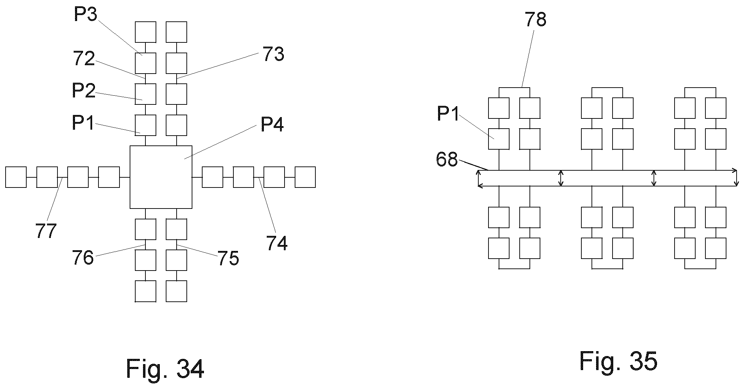

Ein Stern-Layout gemäß Fig. 34 hat eine zentrale Produktionsstation P4 sowie strahlenförmig dazu angeordnete Transportschienen 72-77 hin zu weiteren Produktionsstationen P1, P2, P3, etc.

Es gibt Mischformen der oben genannten Layouts, wie z.B. das in Fig. 35 gezeigte Bus-Ring-Layout, das zentral ein Bus-Layout mit einer Hauptschiene 68 hat, von der wenigstens eine ringförmige Nebenschiene 78 abzweigt. Entlang der Nebenschiene 78 ist wenigstens eine Produktionsstation P1 vorgesehen.

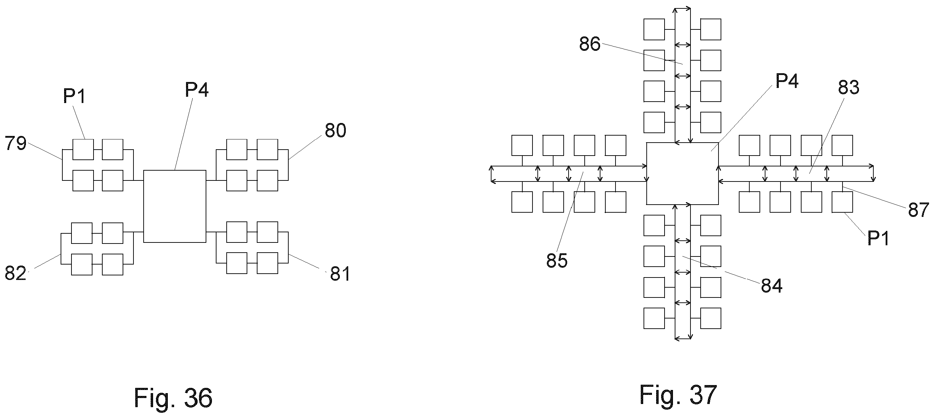

Die Mischform Stern-Ring-Layout gemäß Fig. 36 hat eine zentrale Produktionsstation P4 sowie um die zentrale Produktionsstation herum mehrere ringförmige Transportschienen 79, 80, 81 und 82, die mindestens zu einer weiteren Produktionsstation P1 führen.

Die Mischform eines Stern-Bus-Layouts, wie in Fig. 37 gezeigt, hat eine zentrale Produktionsstation P4 sowie um die zentrale Produktionsstation herum mehrere busförmige Haupttransportschienen 83-86. Seitliche Abzweige, wie Abzweig 87, führen von der Haupttransportschienen 83 zu wenigstens einer Produktionsstation P1.

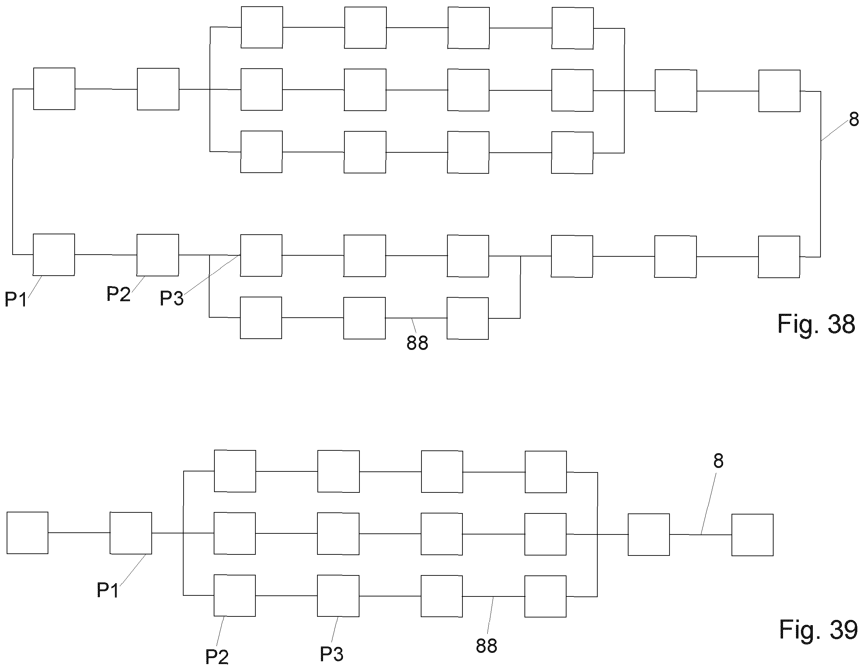

Die Mischform eines Ring-Parallel-Layouts hat, wie in Fig. 38, eine endlos umlaufende ringförmige Transportschiene 8, wobei wenigstens ein Teil der Transportschiene 8 mit wenigstens einer Nebenschiene 88 versehen ist, die parallel zur Transportschiene 8 verläuft. Produktionsstationen P1, P2 und P3 sind in Reihe angeordnet.

Die Mischform eines Reihe-Parallel-Layouts weist gemäß Fig. 39 eine Transportschiene 8 mit Produktionsstationen P1 in einer Reihe auf, wobei die Reihe einen Anfang und ein Ende hat. Wenigstens ein Teil der reihenförmigen Transportschiene hat wenigstens eine Nebenschiene 88, die parallel zur Transportschiene verläuft und Produktionsstationen P2, P3, etc. aufweist.

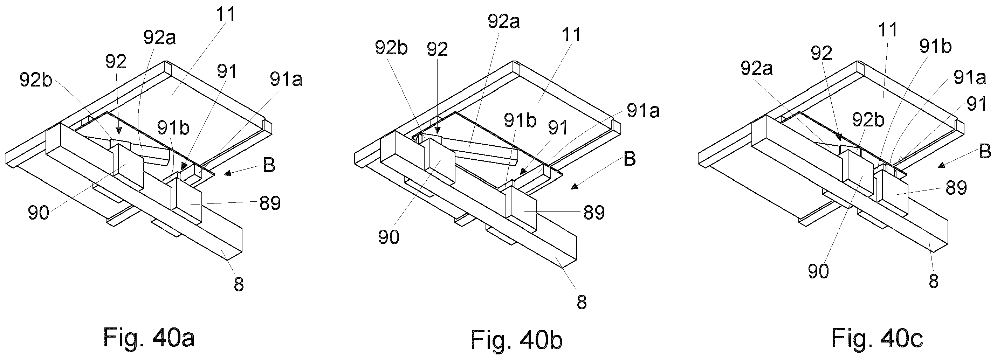

Die Figuren 40a - 40c zeigen eine weitere Ausführungsform eines Transportsystems 1, bei welchem eine Aufnahmeeinrichtung 11 mit einer zusätzlichen Bewegungseinrichtung B für eine Hilfsbewegung zusammenwirkt. In diesem Beispiel wird eine hin und her gehende Hilfsbewegung in Y-Richtung erzeugt, d.h. horizontal und quer zur Transportschiene 8, vorzugsweise 90° zur Transportschiene.

Zu diesem Zweck ist die Aufnahmeeinrichtung 11 mit zwei Schlittenelementen 89 und 90 verbunden und von diesen getragen. Die zusätzliche Bewegungseinrichtung ist so hergerichtet, dass durch eine Bewegung der zwei Schlittenelemente aufeinander zu oder voneinander weg die in Y-Richtung gewünschte Hilfsbewegung erzeugbar ist. Um diese zu ermöglichen ist jedem Schlittenelement eine Linearführung 91 beziehungsweise 92 zugeordnet. Einem ersten Schlittenelement 89 ist in Y-Richtung ausgerichtet eine Linearführung 91 zugeordnet. Sie gewährleistet die exakte Führung der Aufnahmeeinrichtung quer zur Transportschiene. Die dem zweiten Schlittenelement 90 zugeordnete Linearführung 92 ist in einem Winkel von beispielhaft 30° zur Transportschiene angeordnet. Dadurch kann eine Bewegung des zweiten Schlittenelements 90 in Transportrichtung zum Antrieb dienen und gleichzeitig wird die Bewegungsrichtung geändert, damit sich die Aufnahmeeinrichtung 11 in die gewünschte Y-Richtung bewegt.

Hierfür umfasst die Linearführung 91 eine Führungsschiene 91a und eine Lagerung 91b und die Linearführung 92 ist mit einer Führungsschiene 92a und einer Lagerung 92b versehen.

Im vorliegenden Beispiel sind die Führungsschienen 91a/92a mit der Aufnahmeeinrichtung 11 verbunden und die Lagerung 91b ist mit dem Schlittenelement 89 verbunden und die Lagerung 92b ist mit dem Schlittenelement 90 verbunden.

Fig. 40a zeigt eine neutrale Position, bei der die Aufnahmeeinrichtung 11 symmetrisch zur Transportschiene 8 ausgerichtet ist. Das zweite Schlittenelement 90 ist so positioniert, dass sich die Lagerung 92b mittig zur Führungsschiene 92a befindet. Aus dieser neutralen Position kann die Aufnahmeeinrichtung 11 zu beiden Seiten quer bewegt werden in Y-Richtung.

In Fig. 40b ist die Aufnahmeeinrichtung 11 aus der neutralen Position heraus um ihren maximalen Weg zu der einen Seite bewegt und in Fig. 40c um ihren maximalen Weg zur gegenüberliegenden Seite bewegt. Mit dieser zusätzlichen Bewegungseinrichtung B für die Y-Richtung können komplexe Produkte hergestellt werden, wie Brezeln oder Brezeln mit Füllung oder es können Dekorationen hergestellt und sogenannte Schminkaufgaben ausgeführt werden, wie beispielsweise Verzierungen außen auf einem Süßwarenartikel mit Süßwarenmasse, die einen Kontrast bildet. Beispielsweise kann ein Schokoladen-Osterhase mit Augen aus weißer Schokolade versehen werden oder ein Schokoladen-Nikolaus kann einen Bart aus weißer Schokolade bekommen.

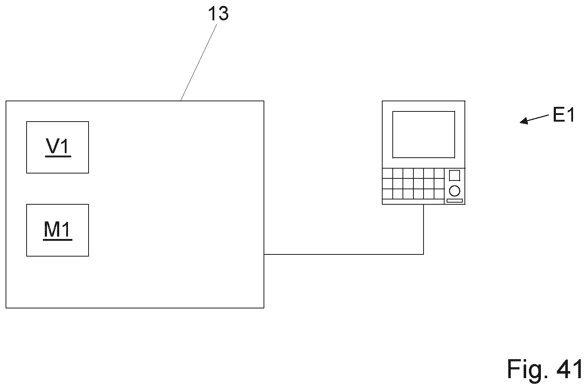

Anhand von Fig. 41 ist die in den Figuren 1 bis 4 vorgesehene Steuereinrichtung 13 erläutert. Sie umfasst eine Verarbeitungseinheit V1 (Prozessor). Mit der Verarbeitungseinheit V1 ist eine Steuerungssoftware ausführbar, die zur Verarbeitung von Informationen hergerichtet ist. Der Verarbeitungseinheit V1 ist ein Datenspeicher M1 zugeordnet. Die Verarbeitungseinheit kann die Daten aller im Transportsystem befindlicher Schlittenelemente verarbeiten. Zumindest verarbeitet sie die Daten bestimmter Schlittenelemente des Transportsystems. Diese Schlittenelement-Daten umfassen wenigstens die Positionsdaten eines Schlittenelementes relativ zur Transportschiene und/oder Geschwindigkeitsdaten der Schlittenelemente relativ zur Transportschiene und/oder Daten, welche sich darauf beziehen, welcher Aufnahmeeinrichtung ein Schlittenelement zugeordnet ist. In der Verarbeitungseinheit sind darüber hinaus Daten verarbeitbar, welche die Gießform betreffen. Die Daten beziehen sich auf Informationen, ob eine Gießform einen Prozessschritt durchlaufen oder ausgelassen hat und/oder auf prozessrelevante Daten, wie die Temperatur einer Gießform oder eine Zeitspanne, welche die Gießform in einem Produktionsschritt verbracht hat, etc.

Des Weiteren ist eine Eingabeeinheit E1 vorgesehen, mittels der in die Steuerungssoftware eingebbar ist, in welcher Reihenfolge eine Gießform zu einzelnen Produktionsstationen zu transportieren ist, und dass diese Reihenfolge als Prozessplan im Datenspeicher ablegbar ist.

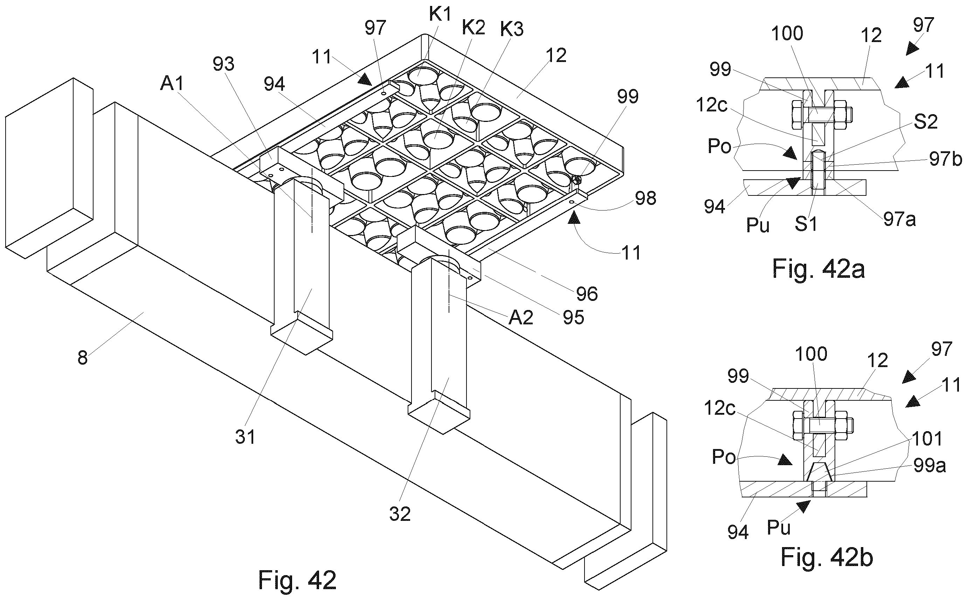

Ein Ausführungsbeispiel für eine rahmenlose Aufnahmeeinrichtung zeigt Fig. 42 als perspektivische Ansicht. Zu sehen ist eine Tragschiene 8 und eine Gießform 12. An deren Unterseite der Form sind einzelne Kavitäten K1, K2, K3 usw. zu erkennen. Von der Oberseite kann Süßwarenmasse in diese Kavitäten eingefüllt werden. Die Kavitäten für die Süßwarenartikel haben runde Böden und die seitliche Wandung ist erkennbar mit einer Schräge für gute Ausformbarkeit fertiger Süßwarenartikel versehen. Die Gießform ist von zwei Schlittenelementen 31 und 32 getragen, die entlang der Tragschiene beweglich sind. An dem Schlittenelement 31 ist ein Adapterteil 93 vorgesehen, an dem wiederum eine Tragleiste 94 angeordnet ist. Gleichfalls hat das Schlittenelement 32 ein Adapterteil 95 und an diesem angeordnet ebenfalls eine Tragleiste 96. Das Adapterteil 93 ist relativ zum Schlittenelement 31 um eine Achse A1 drehbar. Ebenso ist das Adapterteil 95 relativ zum Schlittenelement 32 um eine Achse A2 drehbar gelagert.

Im vorliegenden Ausführungsbeispiel sind symmetrisch vier Positionierhilfen vorgesehen und zwar ist an jedem der zwei Enden einer Tragleiste je eine Positionierhilfe. In Fig. 42 sind davon die Positionierhilfe 97 der Tragleiste 94 und die Positionierhilfe 98 der Tragleiste 96 zu sehen.

Jede Positionierhilfe ist zweiteilig aufgebaut, d. h. sie hat ein unteres Positionierelement Pᵤ sowie ein oberes Positionierelement Pₒ, die miteinander zusammenwirken können. Im Ausführungsbeispiel der Fig. 42a ist das untere an der Tragleiste 94 angeordnete Positionierelement Pᵤ ein Haltemagnet 97a, der mit einer Stiftschraube S1 an der Tragleiste 94 befestigt ist. Passend dazu ist das obere Positionierelement Pₒ an einem Adapterteil 99 an der Unterseite der Gießform 12 angeordnet und ebenfalls als Haltemagnet 97b ausgebildet. Um zwischen den Positionierhilfen 97 und 98 den korrekten Abstand einzuhalten, muss die Distanz der Schlittenelemente 31 und 32 relativ zueinander passen. Zu diesem Zweck ist die Position jedes der Schlittenelemente relativ zur Transportschiene 8 messbar und die Distanz der Schlittenelemente 31 und 32 ist mit ausreichender Genauigkeit steuerbar. Obwohl als Positionierhilfen an zwei Tragleisten vorgesehen sind, von denen jede an einem individuell entlang der Transportschiene beweglichen Schlittenelements befestigt ist, ist die Funktion der Positionierhilfen gewährleistet aufgrund einer exakten Steuerbarkeit der Schlittenelemente 31 und 32 relativ zueinander. Selbstverständlich können Positionierhilfen auch bei einem Transportsystem vorgesehen sein, bei dem nur je ein Schlittenelement die Aufnahmeeinrichtung für eine Gießform trägt. Das Erfordernis, den Abstand zweier Schlittenelemente relativ zueinander exakt steuern zu müssen, entfällt dann.

Um an der Gießform 12 ein oberes Positionierelement Pₒ anordnen zu können, ist ein Adapterteil 99 vorgesehen. Dieses Adapterteil ist an eine Querstrebe 12c der Gießform 12 angepasst und mit einer Schraubverbindung 100 befestigt. Alternativ kann eine Klebverbindung oder eine Schweißverbindung vorgesehen sein, um das Adapterteil 99 mit der Gießform 12 zu verbinden. Das Adapterteil 99 kann des Weiteren als integraler Bestandteil der Gießform mit dieser urgeformt sein. Der Haltemagnet 97b ist mittels einer Stiftschraube S2 am Adapterteil 99 angebracht.

Fig. 42b zeigt eine Alternative Positionierhilfe 97 ohne Haltemagnete. Wiederum ist unten an der Gießform 12 ein Adapterteil 99 an einer Querstrebe 12c der Gießform 12 angebracht. Im Unterschied zum vorherigen Ausführungsbeispiel ist hier das obere Positionierelement Pₒ als eine kegelige Bohrung 99a im Adapterteil 99 ausgebildet. Das untere Positionierelement Pᵤ ist als dazu passender Kegelzapfen 101 ausgebildet und an der Tragschiene 94 angebracht. Die Bohrung 99a und der Kegelzapfen 101 lassen sich zueinander zentrieren.

Wenn eine Gießform 12 auf diese rahmenlose Aufnahmeeinrichtung gesetzt wird, dann richten die Positionierhilfen die Position der Gießform ausreichend genau aus. Außerdem wirken die Positionierhilfen einer seitlichen Verschiebung der Gießform entgegen. Relativ zur Auflageebene, auf der die Gießform ruht, ist sie aufgrund der Positionierhilfen gegen Verschiebung gesichert.

### Bezugszeichenliste

- 1: Transportsystem
- 2: Süßwarenmaschine
- 3: Gießstation
- 4: Schalenformungsstation
- 5: Gießstation
- 6: Kühlstation
- 7: Ausformungsstation
- 8: Transportschiene
- 8a: Transportschiene
- 8b: Transportschiene
- 8c: Schienenstück
- 9: Antriebseinrichtung
- 10: Schlittenelement
- 10a: Schlittenelement
- 10b: Schlittenelement
- 10c: Schlittenelement
- 10d: Schlittenelement
- 11: Aufnahmeeinrichtung
- 12: Gießform
- 12a: Gießformteil
- 12b: Gießformteil
- 12c: Querstrebe
- 13: Steuereinrichtung
- 14: Transportschienennetz
- 15: Hauptschiene
- 16: Schienenstück
- 17: Schienenstück
- 18: 180°-Kurve
- 19: 180°-Kurve
- 20: Abzweigschiene
- 21: Abzweigschiene
- 22: Abzweigschiene
- 23: Abzweigschiene
- 24: Abzweigschiene
- 25: Abzweigschiene
- 26: Abzweigschiene
- 27: Nebenschiene
- 28: Nebenschienenabzweig
- 29: Nebenschienenabzweig
- 30: Schienenelement
- 31: Schienenelement
- 32: Gelenkstab
- 33: Gelenkstab
- 34: Gelenkstab
- 35: Gelenkstab
- 36: Gelenkstab
- 37: Gelenkstab
- 38: Schlittenelement
- 39: Gelenkstab
- 40: horizontale Achse
- 41: Spindel
- 42: erstes Schlittenelement
- 43: Muttergewindeelement
- 44: Außenverzahnung
- 45: Zahnstange
- 46: zweites Schlittenelement
- 47: erstes Schlittenelement
- 48: erster Gelenk starb
- 49: zweiter Gelenkstab
- 50: zweites Schlittenelement
- 51: erstes Schlittenelement
- 52: zweites Schlittenelement
- 53: Zahnstange
- 54: zweites Schlittenelement
- 55: Schlittenelement
- 56: Adapter
- 57: Drehgelenk
- 58: Drehachse
- 59: Bohrung
- 60: Schlittenelement
- 61: Schlittenelement
- 62: Schlittenelement
- 63: Schlittenelement
- 64: Schienenzwischenstück
- 65: Schienenzwischenstück
- 66: Schlittenelement
- 67: Bereich (Spule)
- 68: Hauptschiene
- 69: Abzweig
- 70: Abzweig
- 71: Abzweig
- 72: Transportschiene
- 73: Transportschiene
- 74: Transportschiene
- 75: Transportschiene
- 76: Transportschiene
- 77: Transportschiene
- 78: Nebenschiene
- 79: Transportschiene
- 80: Transportschiene
- 81: Transportschiene
- 82: Transportschiene
- 83: Haupttransportschiene
- 84: Haupttransportschiene
- 85: Haupttransportschiene
- 86: Haupttransportschiene
- 87: Abzweig
- 88: Nebenschiene
- 89: Schlittenelement
- 90: Schlittenelement
- 91: Linearführung
- 91a: Führungsschiene
- 91b: Lagerung
- 92: Linearführung
- 92a: Führungsschiene
- 92b: Lagerung
- 93: Adapterteil
- 94: Tragleiste
- 95: Adapterteil
- 96: Tragleiste
- 97: Positionierhilfe
- 97a: Haltemagnet
- 97b: Haltemagnet
- 98: Positionierhilfe
- 99: Adapterteil
- 99a: kegelige Bohrung
- 100: Schraubverbindung
- 101: Kegelzapfen

- A1: Drehachse
- A2: Drehachse
- A3: Drehachse
- B: Bewegungseinrichtung
- C1: Steuereinheit
- D1: Dauermagnet
- D2: Dauermagnet
- D3: Dauermagnet
- F1: Federelement
- E1: Eingabeeinheit
- F2: Federelement
- G1: Spulenelement
- G2: Spulenelement
- G3: Spulenelement
- K1: Kavität
- K2: Kavität
- K3: Kavität
- M1: Datenspeicher
- P1: Produktionsstation
- P2: Produktionsstation
- P3: Produktionsstation
- Pᵤ: unteres Positionierelement
- Pₒ: oberes Positionierelement
- P4: zentrale Produktionsstation
- R: Rotationsachse
- R1: Ableckwalze
- R2: Ableckwalze
- S: Positionssensor
- S1: Stiftschraube
- S2: Stiftschraube
- T1: Elektromotor
- V1: Verarbeitungseinheit
- X1: Auslöserpunkt
- X2: Auslöserpunkt
- X3: Auslöserpunkt
- Z: Zahnradelement

- α: Winkel

## Patentansprüche

1. Transportsystem (1) für Gießformen (12) einer industriellen Süßwarenmaschine (2), die mehrere Produktionsstationen (P1, P2, P3, P4, 3, 4, 5, 6, 7) und Gießformen (12) zur Herstellung wenigstens eines Süßwarenartikels umfasst, wobei mit der Süßwarenmaschine (2) eine Gießform (12) für aufeinanderfolgende Produktionsschritte zu den jeweiligen Produktionsstationen (P1, P2, P3, P4, 3, 4, 5, 6, 7) transportierbar ist, umfassend eine Transportschiene (8, 8a, 8b, 72, 73, 74, 75, 76, 77, 79, 80, 81, 82) sowie eine Antriebseinrichtung (9, T1, 67, D1, D2, D3, G1, G2, G3), mit welcher eine Transportbewegung für die jeweilige Gießform (12) erzeugbar ist, um die Gießform (12) entlang der einen Transportschiene (8, 8a, 8b, 72, 73, 74, 75, 76, 77, 79, 80, 81, 82) zu den Produktionsstationen (P1, P2, P3, P4, 3, 4, 5, 6, 7) zu transportieren, wobei die Antriebseinrichtung (9, T1, 67, D1, D2, D3, G1, G2, G3) wenigstens zwei schienengeführte Schlittenelemente (10, 38, 42, 46, 47, 50, 51, 54, 55, 60, 61, 62, 63, 66) aufweist, wobei die Schlittenelemente an derselben Transportschiene voneinander beabstandet ankoppelbar sind, wobei wenigstens eines der beiden Schlittenelemente individuell entlang der Transportschiene antreibbar ist, um eine Hauptbewegung zu erzeugen, wobei die beiden Schlittenelemente (10, 38, 42, 46, 47, 50, 51, 54, 55, 60, 61, 62, 63, 66) mit einer Aufnahmeeinrichtung (11) kombiniert sind, mit der wenigstens eine Gießform (12) aufnehmbar ist, wobei eine Steuereinrichtung (13) vorgesehen ist zur Steuerung der Hauptbewegung für das Schlittenelemente (10, 30, 31, 38, 42, 46, 47, 50, 51, 54, 55, 60, 61, 62, 63, 66) zusammen mit der Aufnahmeeinrichtung (11) der Gießform (12) in Transportrichtung zu den jeweiligen Produktionsstationen (P1, P2, P3, P4, 3, 4, 5, 6, 7), und wobei mittels der Steuereinrichtung (13) darüber hinaus zusätzlich eine Hilfsbewegung in die Aufnahmeeinrichtung (11) übertragbar ist, indem die zwei Schlittenelemente relativ voneinander weg oder aufeinander zu bewegbar sind, um die Gießform (12) für den jeweiligen Produktionsschritt passend zu bewegen.

2. Transportsystem nach Anspruch 1, **dadurch gekennzeichnet, dass** das Schlittenelement (10, 30, 31, 38, 42, 46, 47, 50, 51, 54, 55, 60, 61, 62, 63, 66) mit einer zusätzlichen Bewegungseinrichtung (B) versehen ist, die zur Ausführung der Hilfsbewegung der Gießform (12) beitragen kann, und dass die Bewegungseinrichtung (B) zwischen dem Schlittenelement und der Aufnahmeeinrichtung (11) für die Gießform angeordnet ist.

3. Transportsystem nach Anspruch 2, **dadurch ge** - **kennzeichnet,** dass zumindest eines der zwei Schlittenelemente (10, 30, 31, 38, 42, 46, 47, 50, 51, 54, 55, 60, 61, 62, 63, 66) gekoppelt ist mit der Bewegungseinrichtung (B) zur Erzeugung der Hilfsbewegung.

4. Transportsystem nach einem der Ansprüche 1 bis 3, **dadurch gekennzeichnet, dass** die Transportschiene (8) zu einem Transportschienennetz (14) erweitert ist, das Kurven (18, 19) und/oder Weichen und/oder Kreuzungen umfasst.

5. Transportsystem nach Anspruch 4, **dadurch ge-kennzeichnet,** dass das Transportschienennetz (14) ein Ring-Layout aufweist oder ein Reihen-Layout, Bus-Layout, Stern-Layout oder Mischformen, wie ein Bus-Ring-Layout, Stern-Ring-Layout, Stern-Bus-Layout, Ring-Parallel-Layout oder Reihen-Parallel-Layout aufweist.

6. Transportsystem nach einem der Ansprüche 1 bis 5, **dadurch gekennzeichnet, dass** zum individuellen Antrieb des Schlittenelements (10, 30, 31, 38, 42, 46, 47, 50, 51, 54, 55, 60, 61, 62, 63, 66) entlang der Transportschiene ein Elektromotor (T1) vorgesehen ist, dass der Elektromotor am Schlittenelement angeordnet ist oder ein Linearmotor ausgebildet ist, mit dem Schlittenelement als Läufer und der Transportschiene als Stator ausgebildet, mit einem am Schlittenelement angeordneten Mittel (D1, D2, D3), mit dem ein Läufer-Magnetfeld erzeugbar ist und mit einem an der Transportschiene vorgesehen Mittel (67, G1, G2, G3), mit dem ein Stator-Magnetfeld erzeugbar ist.

7. Transportsystem nach einem der Ansprüche 1 bis 6, **dadurch gekennzeichnet, dass** die Steuereinrichtung (13) wenigstens eine Verarbeitungseinheit (V1) umfasst, dass die Verarbeitungseinheit (V1) zur Ausführung einer Steuerungssoftware und zur Verarbeitung von Informationen hergerichtet ist, und dass der Verarbeitungseinheit wenigstens ein Datenspeicher (M1) zugeordnet ist.

8. Transportsystem nach Anspruch 7, **dadurch ge- kennzeichnet,** dass in der Verarbeitungseinheit (V1) die Daten aller im Transportsystem befindlichen Schlittenelemente (10, 38, 42, 46, 47, 50, 51, 54, 55, 60, 61, 62, 63, 66) verarbeitbar sind, und dass die Schlittenelement-Daten wenigstens die Positionsdaten der Schlittenelemente relativ zur Transportschiene (8, 8a, 8b, 72, 73, 74, 75, 76, 77, 79, 80, 81, 82) umfassen und/oder Geschwindigkeitsdaten der Schlittenelemente relativ zur Transportschiene umfassen und/oder Daten umfassen, welche sich darauf beziehen, welcher Aufnahmeeinrichtung (11) ein Schlittenelement zugeordnet ist.

9. Transportsystem nach Anspruch 7 oder 8, **dadurch gekennzeichnet, dass** in der Verarbeitungseinheit (V1) die Gießform (12) betreffende Daten verarbeitbar sind, die sich beziehen auf Informationen, ob eine Gießform einen Prozessschritt durchlaufen oder ausgelassen hat und/oder auf prozessrelevante Daten, wie die Temperatur einer Gießform oder eine Zeitspanne, welche die Gießform in einem Produktionsschritt verbracht hat.

10. Transportsystem nach einem der Ansprüche 7 bis 9, **dadurch gekennzeichnet, dass** eine Eingabeeinheit (E1) vorgesehen ist, mittels der in die Steuerungssoftware eingebbar ist, in welcher Reihenfolge eine Gießform (12) zu einzelnen Produktionsstationen (P1, P2, P3, P4, 3, 4, 5, 6, 7) zu transportieren ist, und dass diese Reihenfolge als Prozessplan im Datenspeicher (M1) ablegbar ist.

11. Transportsystem nach Anspruch 10, **dadurch ge-kennzeichnet,** dass in den Prozessplan für jede Gießform (12) wenigstens ein Parametersatz speicherbar ist, der sich auf einen Produktionsschritt bezieht, welchen die Gießform zu durchlaufen hat.

12. Transportsystem nach einem der Ansprüche 7 bis 11, **dadurch gekennzeichnet, dass** die Transportschiene (8, 8a, 8b, 72, 73, 74, 75, 76, 77, 79, 80, 81, 82) in der Steuerungssoftware virtuell abgebildet ist und entlang der Transportschiene prozessrelevante Auslöserpunkte (X1, X2, X3) vorgesehen sind, dass die reale Transportbewegung eines Schlittenelements (10, 30, 31, 38, 42, 46, 47, 50, 51, 54, 55, 60, 61, 62, 63, 66) als virtueller Schlittenpositionspunkt in der Steuerungssoftware mitbewegt wird, und dass softwaregesteuert ein Prozess aktivierbar ist, wenn ein Schlittenpositionspunkt einen Auslöserpunkt (X1, X2, X3) erreicht.

## Claims

1. A transport system (1) for molds (12) of an industrial confectionery machine (2) which comprises a plurality of production stations (P1, P2, P3, P4, 3, 4, 5, 6, 7) and molds (12) for producing at least one confectionery article, wherein a mold (12) can be transported to the respective production stations (P1, P2, P3, P4, 3, 4, 5, 6, 7) with the confectionery machine (2) for successive production steps, including a transport rail (8, 8a, 8b, 72, 73, 74, 75, 76, 77, 79, 80, 81, 82) and a drive device (9, T1, 67, D1, D2, D3, G1, G2, G3) with which a transport movement for the respective mold (12) can be produced to transport the mold (12) along one transport rail (8, 8a, 8b, 72, 73, 74, 75, 76, 77, 79, 80, 81, 82) to the production stations (P1, P2, P3, P4, 3, 4, 5, 6, 7), **characterised in that** the drive device (9, T1, 67, D1, D2, D3, G1, G2, G3) has at least two rail-guided carriage elements (10, 38, 42, 46, 47, 50, 51, 54, 55, 60, 61, 62, 63, 66), wherein the carriage elements can be coupled to the same transport rail at a distance from one another, wherein at least one of the two carriage elements is individually drivable along the transport rail, in order to generate a main movement, wherein the two carriage elements (10, 38, 42, 46, 47, 50, 51, 54, 55, 60, 61, 62, 63, 66) are combined with a receiving device (11) with which at least one mold (12) can be received, wherein a control device (13) is provided for controlling the main movement for the carriage element (10, 38, 42, 46, 47, 50, 51, 54, 55, 60, 61, 62, 63, 66) together with the receiving device (11) of the mold (12) in the transport direction toward the respective production stations (P1, P2, P3, P4, 3, 4, 5, 6, 7), and wherein by means of the control device (13) an auxiliary movement can be additionally transmitted into the receiving device (11) **in that** the two carriage elements are movable relative to one another or away from each other, in order to suitably move the mold (12) for the respective production step.

2. A transport system as set forth in claim 1 **characterised in that** the carriage element (10, 30, 31, 38, 42, 46, 47, 50, 51, 54, 55, 60, 61, 62, 63, 66) is provided with an additional movement device (B) which can contribute to implementation of the auxiliary movement of the mold (12) and that the movement device (B) is arranged between the carriage element and the receiving device (11) for the mold.

3. A transport system as set forth in claim 2 **characterised in that** at least one of the two carriage elements (10, 38, 42, 46, 47, 50, 51, 54, 55, 60, 61, 62, 63, 66) is coupled to the movement device (B) for producing the auxiliary movement.

4. A transport system as set forth in one of claims 1 through 3 **characterised in that** the transport rail (8) is enlarged to give a transport rail network (14) which has curves (18, 19) and/or switch devices and/or crossings.

5. A transport system as set forth in claim 4 **characterised in that** the transport rail network (14) has a ring layout or a series layout, a bus layout, a star layout, or hybrid forms like a bus-ring layout, a star-ring layout, a star-bus layout, a ring-parallel layout or a series-parallel layout.

6. A transport system as set forth in one of claims 1 through 5 **characterised in that** there is provided an electric motor (T1) for the individual drive of the carriage element (10, 38, 42, 46, 47, 50, 51, 54, 55, 60, 61, 62, 63, 66) along the transport rail, the electric motor is arranged at the carriage element or is in the form of a linear motor with the carriage element as the motor and the transport rail as the stator, with a means (D1, D2, D3) which is arranged on the carriage element and with which a rotor magnetic field can be generated, and a means (67, G1, G2, G3) which is provided on the transport rail and with which a stator magnetic field can be generated.

7. A transport system as set forth in one of claims 1 through 6 **characterised in that** the control device (13) includes at least one processing unit (V1) and that the processing unt (V1) is adapted to execute control software and to process items of information, and that at least one data memory (M1) is associated with the processing unit.

8. A transport system as set forth in claim 7 **characterised in that** the data of all carriage elements (10, 38, 42, 46, 47, 50, 51, 54, 55, 60, 61, 62, 63, 66) disposed in the transport system can be processed in the processing unit (V1) and that the rail element data include at least the position data of the carriage elements relative to the transport rail (8, 8a, 8b, 72, 73, 74, 75, 76, 77, 79, 80, 81, 82) and/or speed data of the carriage elements relative to the transport rail and/or data which relate to which receiving device (11) has a carriage element associated therewith.

9. A transport system as set forth in claim 7 or claim 8 **characterised in that** data concerning the mold (12) can be processed in the processing unit (V1), which data relate to information as to whether a mold has passed through or left out a process step and/or to process-relevant data like the temperature of a mold or a period of time that the mold spent in a production step.

10. A transport system as set forth in one of claims 7 through 9 **characterised in that** there is provided an input unit (E1), by means of which it is possible to input into the control software, in what sequence a mold (12) is to be transported to individual production stations (P1, P2, P3, P4, 3, 4, 5, 6, 7) and said sequence can be filed as a process plan in the data memory (M1).

11. A transport system as set forth in claim 10 **characterised in that** at least one parameter set relating to a production step which the mold has passed through can be stored in the process plan for each mold (12).

12. A transport system as set forth in one of claims 7 through 11 **characterised in that** the transport rail (8, 8a, 8b, 72, 73, 74, 75, 76, 77, 79, 80, 81, 82) is virtually imaged in the control software and process-relevant trigger points (X1, X2, X3) are provided along the transport rail, the real transport movement of a carriage element (10, 38, 42, 46, 47, 50, 51, 54, 55, 60, 61, 62, 63, 66) is also moved as a virtual carriage position point in the control software and that a process can be activated under software control when a carriage position point reaches a trigger point (X1, X2, X3).

## Revendications

1. Système de transport (1) pour moules de coulée (12) d'une machine de confiserie industrielle (2) comprenant plusieurs postes de production (P1, P2, P3, P4, 3, 4, 5, 6, 7) et moules de coulée (12) pour la fabrication d'au moins un article de confiserie, la machine de confiserie (2) pouvant transporter un moule de coulée (12) vers les postes de production respectifs (P1, P2, P3, P4, 3, 4, 5, 6, 7) en vue d'étapes de production successives, comprenant un rail de transport (8, 8a, 8b, 72, 73, 74, 75, 76, 77, 79, 80, 81, 82) ainsi qu'un dispositif d'entraînement (9, T1, 67, D1, D2, D3, G1, G2, G3) avec lequel peut être généré un mouvement de transport pour le moule de coulée respectif (12), afin de transporter le moule de coulée (12) le long de ce seul rail de transport (8, 8a, 8b, 72, 73, 74, 75, 76, 77, 79, 80, 81, 82) vers les postes de production (P1, P2, P3, P4, 3, 4, 5, 6, 7), le dispositif d'entraînement (9, T1, 67, D1, D2, D3, G1, G2, G3) présentant au moins deux éléments de chariot (10, 38, 42, 46, 47, 50, 51, 54, 55, 60, 61, 62, 63, 66) guidés par rail, les éléments de chariot pouvant être accouplés, espacés l'un de l'autre, sur le même rail de transport, au moins l'un des deux éléments de chariot pouvant être entraîné individuellement le long du rail de transport afin de générer un mouvement principal, les deux éléments de chariot (10, 38, 42, 46, 47, 50, 51, 54, 55, 60, 61, 62, 63, 66) étant combinés à un dispositif de réception (11) avec lequel au moins un moule de coulée (12) peut être reçu, un dispositif de commande (13) étant prévu pour commander le mouvement principal pour l'élément de chariot (10, 30, 31, 38, 42, 46, 47, 50, 51, 54, 55, 60, 61, 62, 63, 66) conjointement avec le dispositif de réception (11) du moule de coulée (12) dans le sens du transport vers les postes de production respectifs (P1, P2, P3, P4, 3, 4, 5, 6, 7) et le dispositif de commande (13) permettant en outre d'imprimer en plus au dispositif de réception (11) un mouvement auxiliaire résultant du fait que les deux éléments de chariot peuvent être éloignés ou rapprochés l'un de l'autre, afin de déplacer le moule de coulée (12) de manière adaptée à l'étape de production respective.

2. Système de transport selon la revendication 1, **caractérisé en ce que** l'élément de chariot (10, 30, 31, 38, 42, 46, 47, 50, 51, 54, 55, 60, 61, 62, 63, 66) est muni d'un dispositif de déplacement (B) supplémentaire qui peut participer à l'exécution du mouvement auxiliaire du moule de coulée (12) et **en ce que** le dispositif de déplacement (B) est disposé entre l'élément de chariot et le dispositif de réception (11) destiné au moule de coulée.

3. Système de transport selon la revendication 2, **caractérisé en ce qu'**au moins un des deux éléments de chariot (10, 30, 31, 38, 42, 46, 47, 50, 51, 54, 55, 60, 61, 62, 63, 66) est couplé au dispositif de déplacement (B) en vue de générer le mouvement auxiliaire.

4. Système de transport selon l'une des revendications 1 à 3, **caractérisé en ce que** le rail de transport (8) est étendu en un réseau de rails de transport (14) comprenant des courbes (18, 19) et/ou des aiguillages et/ou des croisements.

5. Système de transport selon la revendication 4, **caractérisé en ce que** le réseau de rails de transport (14) présente une configuration en anneau ou une configuration en série, une configuration en bus, une configuration en étoile ou des formes mixtes, comme une configuration en bus et en anneau, une configuration en étoile et en anneau, une configuration en étoile et en bus, une configuration en anneau et en parallèle ou une configuration en série et en parallèle.

6. Système de transport selon l'une des revendications 1 à 5, **caractérisé en ce qu'**en vue de l'entraînement individuel de l'élément de chariot (10, 30, 31, 38, 42, 46, 47, 50, 51, 54, 55, 60, 61, 62, 63, 66) le long du rail de transport est prévu un moteur électrique (T1), que le moteur électrique est disposé au niveau de l'élément de chariot ou qu'un moteur linéaire est formé, avec lequel l'élément de chariot est formé comme rotor et le rail de transport comme stator, avec un moyen (D1, D2, D3) disposé au niveau de l'élément de chariot et avec lequel un champ magnétique de rotor peut être généré, et avec un moyen (67, G1, G2, G3) prévu au niveau du rail de transport et avec lequel un champ magnétique de stator peut être généré.

7. Système de transport selon l'une des revendications 1 à 6, **caractérisé en ce que** le dispositif de commande (13) comprend au moins une unité de traitement (V1), que l'unité de traitement (V1) est aménagée en vue de l'exécution d'un logiciel de commande et du traitement d'informations et qu'au moins une mémoire de données (M1) est affectée à l'unité de traitement.

8. Système de transport selon la revendication 7, **caractérisé en ce que** les données de tous les éléments de chariot (10, 38, 42, 46, 47, 50, 51, 54, 55, 60, 61, 62, 63, 66) présents dans le système de transport peuvent être traitées dans l'unité de traitement (V1) et **en ce que** les données des éléments de chariot comprennent au moins les données de position des éléments de chariot par rapport au rail de transport (8, 8a, 8b, 72, 73, 74, 75, 76, 77, 79, 80, 81, 82) et/ou comprennent les données de vitesse des éléments de chariot par rapport au rail de transport et/ou comprennent des données relatives au dispositif de réception (11) auquel un élément de chariot est affecté.

9. Système de transport selon les revendications 7 ou 8, **caractérisé en ce que** peuvent être traitées dans l'unité de traitement (V1) les données concernant le moule de coulée (12), qui se rapportent à des informations indiquant si le moule de coulée est passé par ou a sauté une étape du processus et/ou à des données importantes pour le processus, comme la température d'un moule de coulée ou un laps de temps que le moule de coulée a passé dans une étape de production.

10. Système de transport selon l'une des revendications 7 à 9, **caractérisé en ce qu'**est prévue une unité de saisie (E1) au moyen de laquelle il est possible de saisir dans le logiciel de commande l'ordre dans lequel un moule de coulée (12) doit être transporté vers les différents postes de production (P1, P2, P3, P4, 3, 4, 5, 6, 7) et **en ce que** cet ordre peut être stocké dans la mémoire de données (M1) sous forme de plan de processus.

11. Système de transport selon la revendication 10, **caractérisé en ce qu'**il est possible d'enregistrer dans le plan de processus de chaque moule de coulée (12) au moins un jeu de paramètres se rapportant à une étape de production par laquelle le moule de coulée doit passer.

12. Système de transport selon l'une des revendications 7 à 11, **caractérisé en ce que** le rail de transport (8, 8a, 8b, 72, 73, 74, 75, 76, 77, 79, 80, 81, 82) est représenté de manière virtuelle dans le logiciel de commande et des points de déclenchement (X1, X2, X3) sont prévus le long du rail de transport, **en ce que** le mouvement de transport réel d'un élément de chariot (10, 30, 31, 38, 42, 46, 47, 50, 51, 54, 55, 60, 61, 62, 63, 66) est simultanément déplacé en tant que point de position virtuel du chariot dans le logiciel de commande et **en ce qu'**un processus peut être activé sur commande du logiciel quand un point de position du chariot atteint un point de déclenchement (X1, X2, X3).
